# EUROPEAN PATENT APPLICATION

(11) **EP 2 693 229 A1**
(43) Date of publication of application: **05.02.2014**
(21) Application number: 12765358.2
(22) Date of filing: 26.03.2012
(51) Int. Cl.: G01R 31/36, H02J 7/00, H02J 7/34

(54) **ELECTRICAL STORAGE SYSTEM AND MOBILE BODY**

(30) Priority: 30.03.2011 JP 2011074407; 30.08.2011 JP 2011187352
(71) Applicant: Sanyo Electric Co., Ltd., Osaka 570-8677 (JP)
(72) Inventor: ISHII, Yohei, Moriguchi City, Osaka 570-8677 (JP); TOMINAGA, Ryuichiro, Moriguchi City, Osaka 570-8677 (JP)
(74) Representative: Glawe, Delfs, Moll
(86) International application number: PCT/JP2012/057701
(87) International publication number: WO 2012/133274

(57) **Abstract**

An electrical storage system (100) includes: a plurality of electrical storage portions (BAT[1] to BAT[n]) that are connected parallel to each other; a measurement portion that measures the full charge capacity of each of the electrical storage portions while switching an electrical storage portion that is a measurement target among the electrical storage portions; and a charge and discharge control portion that performs charge and discharge control on the electrical storage portions. The charge and discharge control portion makes other electrical storage portion other than the measurement target perform charge or discharge in a period of time during which the measurement portion measures the full charge capacity of the electrical storage portion that is the measurement target.

## Description

### Technical Field

The present invention relates to an electrical storage system and a mobile body.

### Background Art

In recent years, the capacity of storage batteries has been increased, and thus electrical storage systems (or power management systems) that store power consumed at buildings, factories, stores, homes and the like are being introduced. In the electrical storage system (or the power management system) described above, after the storage battery is charged, it is possible to discharge, at arbitrary timing, the storage battery to an electrical device that is a load (that is, to supply power to the load). Hence, the times at which the charge and discharge of the storage battery are performed are controlled, and thus it is possible to control the time at which system power (power supplied from an electric power company) is consumed.

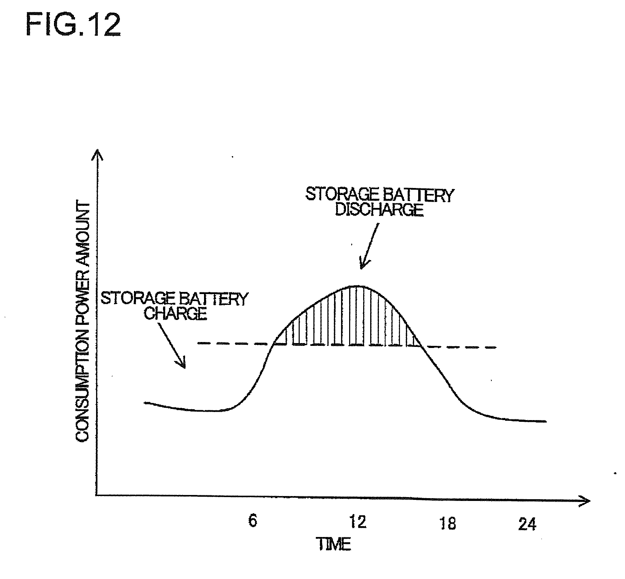

Hence, power in the time when the power consumption amount is large in a power demand curve as shown in Fig. 12 is compensated for by the discharge of a storage battery, and thus it is possible to effectively utilize midnight power and level out (perform peak cut) the amount of use of system power caused by variations in power consumption. Then, since in the time when the power consumption amount is large, as compared with the time when the power consumption amount is small, the proportion of the power supply by thermal power generation where the amount of emission of CO₂ is large is high, it is possible to reduce the amount of emission of CO₂ by the leveling out.

Furthermore, the power charge of the system power includes a fixed basic charge and a usage-based usage charge. An electric power company sets the usage charge such that as the maximum value of the system power consumed per unit time is decreased, the basic charge is reduced or that the usage charge per unit power is more inexpensive at night where the power consumption amount is small than in the daytime where the power consumption amount is large.

Hence, the leveling out is performed using the electrical storage system, that is, the storage battery is charged by utilizing the system power in a period of time during which the power demand of users using the system power is low or in a period of time during which a midnight electric charge is applied, and, when the power demand of the users using the system power exceeds a predetermined threshold value, power corresponding to a portion of the power demand exceeding the predetermined threshold value is compensated for by the discharge of the storage battery, with the result that it is possible to reduce the power charge of the system power.

### Related Art Document

### Patent Document

Patent document 1: JP-A-2006-140094
Patent document 2: JP-A-2000-060020
Summary of the Invention

### Problems to be Solved by the Invention

Since as the storage battery described above, a storage battery such as a lithium-ion battery is used, the degradation of the battery is developed when the battery is used for a long time, with the result that the capacity of the battery that can be charged and discharged is disadvantageously reduced.

Patent document 1 discloses, as a technology for managing a lithium-ion battery, a technology for determining the state of the charge and discharge of the lithium-ion battery, based on the measurement value of a charge and discharge current of the lithium-ion battery, the measurement value of the temperature and information on power supply by a commercial power supply, and for estimating the remaining capacity of the lithium-ion battery.

However, unless the electrical storage system constantly grasps the capacity of the battery that can be charged or discharged, the electrical storage system cannot charge and discharge an accurate power amount, with the result that there is a possibility that it is impossible to perform desired power supply. In order to appropriately charge and discharge the storage battery, it is important to know the accurate remaining capacity (SOC) of the storage battery at present. As a method of estimating the SOC, there are: a voltage table method in which a relationship between the voltage and the remaining capacity is acquired as a table, and in which the remaining capacity corresponding to the measured voltage is determined by referencing the table; and a current totalizing method of totalizing a charge and discharge current with respect to a fully charged state and thereby determining the remaining amount. In either method, since the capacity of the battery becomes inaccurate as the number of times the battery is charged and discharged is increased and time passes, in order to estimate the accurate SOC, it is necessary to perform capacity learning (calibration), that is, to measure the capacity of the storage battery that can be charged and discharged and store the latest data.

In the capacity learning, after the battery is fully discharged once (SOC: 0%), the battery is charged until the full charge (SOC: 100%), and the actual capacity is measured and thus the capacity of the battery is learned. On the other hand, for example, when an electrical storage system is used for an application such as the peak cut, it is necessary to save the capacity for the peak cut. In such an application, the capacity learning involving the full discharge is performed, and thus it is difficult to perform an original power supply operation.

Patent document 2 discloses a technology for performing the capacity learning on a single battery for a short period of time, and proposes that the load of an apparatus incorporating a storage battery is increased so as to quickly perform discharge in the capacity learning, the power consumption amount is increased to reduce the time needed for the capacity learning and thus the time during which the normal operation is prevented is reduced. However, with this method, it is impossible to eliminate the period of time during which the normal operation cannot be operated. Hence, the present invention has an object to perform the capacity learning while the normal operation of a system can be constantly performed or the normal operation is preferentially performed.

### Means for Solving the Problem

According to the present invention, there is provided an electrical storage system including: a plurality of electrical storage portions that are connected parallel to each other; a measurement portion that measures the full charge capacity of each of the electrical storage portions while switching an electrical storage portion that is a measurement target among the electrical storage portions; and a charge and discharge control portion that performs charge and discharge control on the electrical storage portions, where the charge and discharge control portion makes other electrical storage portion other than the measurement target included in the electrical storage portions perform charge or discharge in a period of time during which the measurement portion measures the full charge capacity of the electrical storage portion that is the measurement target.

### Effects of the Invention

In the electrical storage system of the present invention, it is possible to measure the full charge capacity of a plurality of electrical storage portions incorporated in the electrical storage system without stopping charge or discharge on the entire system. Hence, it is possible to measure the full charge capacity of each electrical storage portion without hindering the continuous operation of the system.

The significance and effects of the present invention will further become obvious by the description of embodiments discussed below. However, the following embodiments are simply one of the embodiments of the present invention, and the present invention and the significance of the terms of individual configuration requirements are not limited to what is described in the following embodiments.

### Brief Description of Drawings

[Fig. 1] A diagram showing the overall configuration of a facility including a power management system according to a first embodiment of the present embodiment;
[Fig. 2] A diagram showing the relation of the individual blocks of the power management system according to the first embodiment of the present invention;
[Fig. 3] A diagram showing the structure of the power management system according to the first embodiment of the present invention;
[Fig. 4] A control flowchart of a system controller of the power management system;
[Fig. 5] A control flowchart of a master controller that performs capacity learning in a first example;
[Fig. 6] A control flowchart of a master controller that performs capacity learning in a second example;
[Fig. 7] A diagram illustrating the state of progress of the capacity learning on the storage batteries of the power management system according to the first embodiment of the present invention;

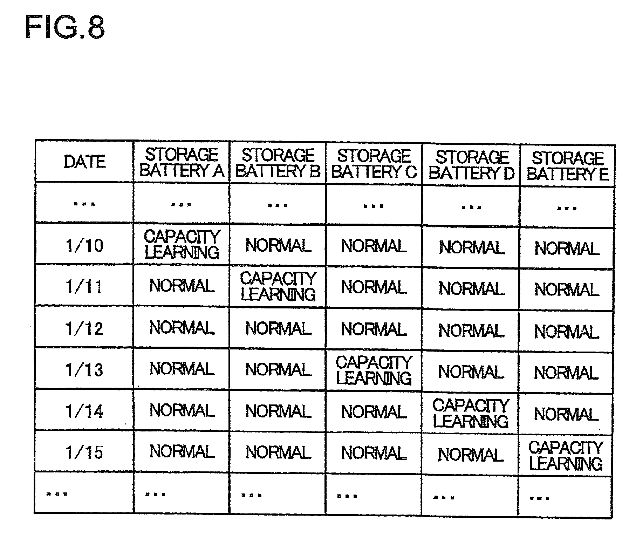

[Fig. 8] A diagram illustrating the state of progress of the capacity learning on the storage batteries of the power management system according to the first embodiment of the present invention;
[Fig. 9] A diagram showing data in the storage portion of the master controller;
[Fig. 10] A diagram showing charge or discharge rate characteristics at the time of charge or discharge of the storage battery;
[Fig. 11] A diagram showing a temperature characteristic at the time of charge or discharge of the storage battery;
[Fig. 12] A diagram showing a power demand curve;
[Fig. 13] A block diagram of a power management system in a third example;
[Fig. 14] A block diagram of a battery system in the third example;
[Fig. 15] A configuration diagram of a power management system in a fourth example;
[Fig. 16] A diagram showing an example of the state of display of a display monitor;
[Fig. 17] A control flowchart of capacity learning start determination processing in the fourth example;
[Fig. 18] A control flowchart of capacity learning stop determination processing in the fourth example;
[Fig. 19] A schematic configuration diagram of an electrical storage system according to a second embodiment of the present invention;
[Fig. 20] An internal configuration block diagram of a control block according to the second embodiment of the present invention;
[Fig. 21] An internal functional block diagram of the control block according to the second embodiment of the present invention;
[Fig. 22] An internal functional block diagram of the control block according to the second embodiment of the present invention;
[Fig. 23] A diagram showing a plurality of times assumed in the second embodiment of the present invention;
[Fig. 24] An operation flowchart of the electrical storage system according to the second embodiment of the present invention:
[Fig. 25] A diagram showing the condition of use of a plurality of storage battery packs assumed in the second embodiment of the present invention; and
[Fig. 26] A schematic configuration diagram of a vehicle incorporating the electrical storage system according to the present invention.

### Description of Embodiments

### «First embodiment»

A first embodiment of the present invention will be described below with reference to accompanying drawings. Although in the present embodiment, a lithium-ion battery is used as a storage battery for a power management system, a storage battery, other than the lithium-ion battery, such as a nickel-metal hydride battery or a nickel-cadmium battery may be used (the same is true in a second embodiment, which will be described later). Since a storage battery aggregate is formed so that a voltage and a current corresponding to power necessary for a load are obtained, the number of unit storage batteries constituting the storage battery aggregate, the number of storage battery packs in which the unit storage batteries are combined and the like can be changed as necessary according to the specifications of the power management system. The number, the voltage, the power and the like that will be described below are illustrative; they can be changed as necessary according to the power specifications of the power management system.

### <System configuration>

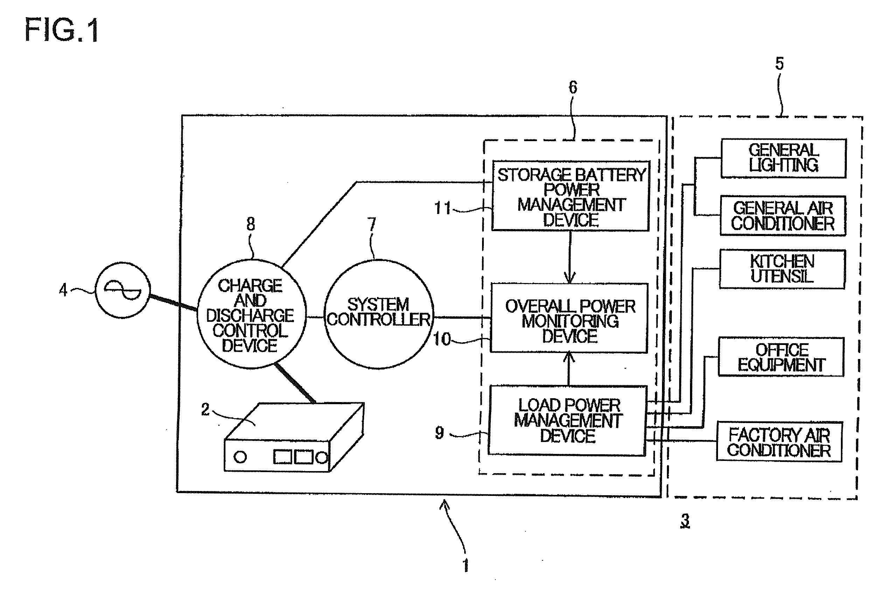

Fig. 1 is a diagram showing the configuration of a factory facility 3 including the storage battery aggregate 2 as an example of the facility provided in the power management system 1. The factory facility 3 described above uses system power 4 as a power source, and acquires power necessary for general lighting, a general air conditioner, kitchen utensils, office equipment such as a server and a PC, a factory air conditioner and the like, which are the load 5 of the factory. In order to correspond to variations in the load 5 of this factory and the like, the factory facility 3 includes the storage battery aggregate 2 of a few mega watt hours.

The power management system 1 is configured to include the storage battery aggregate 2, a power management device 6, a system controller 7 and a charge and discharge control device 8, and has the function of performing the optimum charge and discharge control on the storage battery aggregate 2 based on the condition of the power necessary for the load 5 and the state of the storage battery aggregate 2. The power management device 6 includes a load power management device 9 that manages power on the side of the load, a storage battery power management device 11 that manages power on the side of the storage battery aggregate and an overall power monitoring device 10.

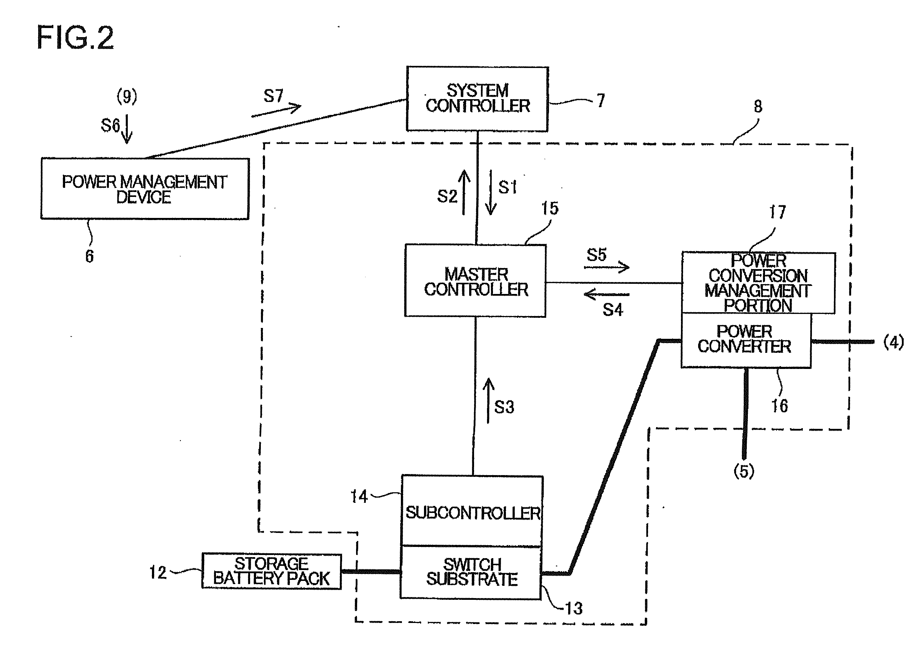

Fig. 2 is a diagram illustrating the system controller 7 and the internal configuration of the charge and discharge control device 8. In Fig. 2, thick solid lines indicate the flow of the power, and thin solid lines with arrows next to them indicate the flow of signals. S1 to S7 represent the types of signals.

The system power 4 is a single-phase or three-phase alternating-current power source, and is supplied from an external electric power company. A storage battery pack 12 forms the storage battery aggregate 2 of a few mega watt hours, and is formed by combining a large number of lithium-ion storage batteries. The load power management device 9 is a device that has the function of acquiring load-side information data on the condition of the power necessary for the load. When as shown in Fig. 1, the load 5 of the factory facility 3 is divided into four systems, the load power management device 9 can be configured as an aggregate of the load power management devices of four systems provided internally.

### <System controller>

The system controller 7 is a control device that has the function of receiving the transmission of power management information S7 from the power management device 6 and of transmitting, to the charge and discharge control device 8, a charge and discharge control instruction S1 to compensate for power to be supplied to the load and an instruction to start capacity learning, which will be described later.

Specifically, the system controller 7 predicts necessary power from load-side state data, and transmits the charge and discharge control instruction S1 to a master controller 15. Based on the prediction described above, the date and time when the capacity learning needs to be started are determined, and a capacity learning start instruction is transmitted. With respect to the power management information S7, the overall power monitoring device 10 described with reference to Fig. 1 receives load-side information data S6 from the load power management device 9, and transmits it to the system controller. Here, the load-side information data S6 is a value that is set by the system controller 7 as a parameter of the charge and discharge control instruction S1, and is related to the power amount required by the entire load 5.

### <Charge and discharge control device>

The charge and discharge control device 8 is a device that receives, as described above, the charge and discharge control instruction S1 from the system controller 7, and that performs charge and discharge control on the storage battery aggregate 2 formed with a plurality of storage battery packs 12. The charge and discharge control device 8 is configured to include the master controller 15, a power conversion management portion 17 that manages a power converter 16 and a subcontroller 14 that manages the storage battery aggregate 2 for each of the storage battery packs 12. As will be describe later, eight power converters 16 can be provided in the charge and discharge control device 8.

### <Master controller>

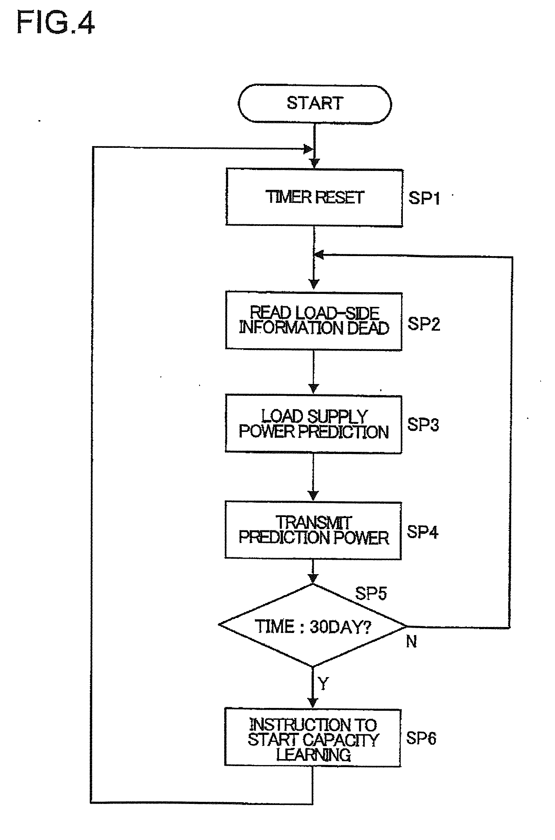

The master controller 15 is a control device that has the function of transmitting, to the power conversion management portion 17, an aggregate charge and discharge control instruction S5 for each of the power converters 16 based on the charge and discharge control instruction S 1 received from the system controller 7. The master controller 15 includes a memory M (holding portion; see Fig. 4), and stores and holds the chargeable capacity of each storage battery pack 12 measured by the capacity learning, which will be described later.

### <Subcontroller>

The subcontroller 14 acquires storage battery pack state data S3 including state data on the storage battery pack 12, and transmits it to the master controller 15. The storage battery pack state data S3 is information that indicates the state of the storage battery pack 12, and that includes the voltage, the temperature, the current, the SOC (state of charge), which is the charge degree, and the like of the storage battery pack 12.

The master controller 15 receives, from the power conversion management portion 17, power converter management data S4 that is the state data on the power converter 16, and receives, from the subcontroller 14, the storage battery pack state data S3 that is the state date on each of the storage battery packs 12. Based on the power converter management data S4 and the storage battery pack state data S3 that have been received, the aggregate charge and discharge control instruction S5 is transmitted to the power conversion management portion 17. The master controller 15 can transmit, as data S2, to the system controller 7, arbitrary data (that can include S3 and S4) acquired or generated by itself.

The charge and discharge control instruction S1 is a single instruction value for the master controller 15; the aggregate charge and discharge control instruction S5 is an instruction value that is divided for each of the power converters 16. For example, when eight power converters 16 are provided for one power conversion management portion 17, if the details of the charge and discharge control instruction S1 are assumed to be "discharge at 320 kW for 1800 seconds", the details of the aggregate charge and discharge control instruction S5 are "the first power converter 16 performs discharge at 40 kW, the second power converter 16 performs discharge at 40 kW ... and the eight power converter 16 performs discharge at 40 kW".

Each instruction value of the aggregate charge and discharge control instruction S5 is used for providing an individual change and discharge instruction to each of the storage battery packs, and specifies a charge upper limit voltage to "perform XX kW charge until the voltage reaches ZZ V", specifies a discharge lower limit voltage to "perform discharge until ZZ V" or specifies the SOC to provide an instruction of the change and discharge. Here, the SOC refers to a percentage obtained by assuming that the SOC (charge degree) in a state where the maximum power is stored is 100 and then expressing, in percentage, with reference to it, the SOC (charge degree) in each state of storage of power.

The subcontroller 14 performs charge and discharge control on the storage battery pack 12 in which twenty storage batteries 20 are combined; the master controller 15 organizes the entire subcontroller 14 that is the unit of the charge and discharge control, and manages it as one entity,

The power conversion management portion 17 has the function of receiving the aggregate charge and discharge control instruction S5 from the master controller 15 and managing the operation of the eight power converters 16. The number of power converters 16 may not be eight; in the case of a simple system, one power converter 16 can be managed by the power conversion management portion 17. Here, the power converter 16 has the function of performing power conversion between the alternating-current power of the system power 4 and the direct-current power of the storage battery or voltage conversion between the voltage of the storage battery and the voltage of the load 5, and is a converter such as a bidirectional AC/DC converter or a bidirectional DC/DC converter. Specifically, the type of converter that is used is selected according to the details of conversion that is actually performed.

The power conversion management portion 17 has the function of performing power management that controls the operation of the power converter 16 according to the aggregate charge and discharge control instruction S5, that temporarily stores the power of the system power 4 in the storage battery aggregate 2 and that discharges the stored power to the load 5.

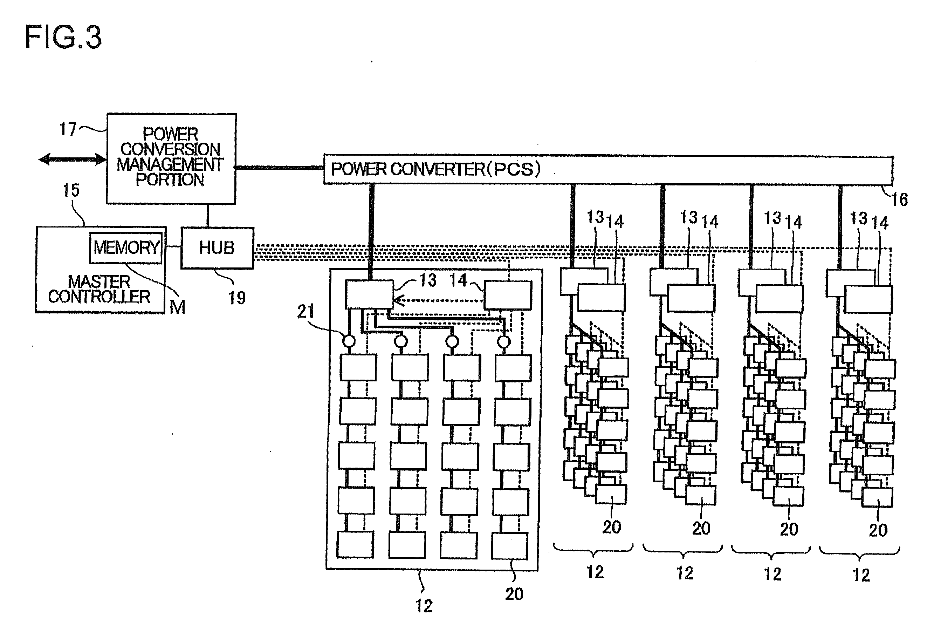

Fig. 3 is a diagram showing the structure of the storage battery aggregate 2 of the power management system 1. Power lines are indicated by thick solid lines, and signal lines are indicated by broken lines. As shown here, the power conversion management portion 17 performs power management on five storage battery packs 12 connected to the power converter 16.

The master controller 15 is connected through the signal lines via a hub 19 to each of the subcontrollers 14; the subcontroller 14 controls a switch substrate 13 by an instruction from the master controller 15, and transmits various types of data on the storage battery pack 12 to the master controller 15. The switch substrate 13 includes a high-voltage switch circuit, and switches whether or not to output an output of the storage batteries 20 of the storage battery pack 12 to the power converter 16.

Then, the storage battery pack 12 includes measurement devices 21 that measure the current values, and output data on the measurement values to the master controller. In the master controller 15, according to the control flow that will be described later, the measurement values are totalized, and thus a capacity value is determined (the measurement devices 21 and the master controller 15 can constitute a measurement portion).

### <Capacity learning>

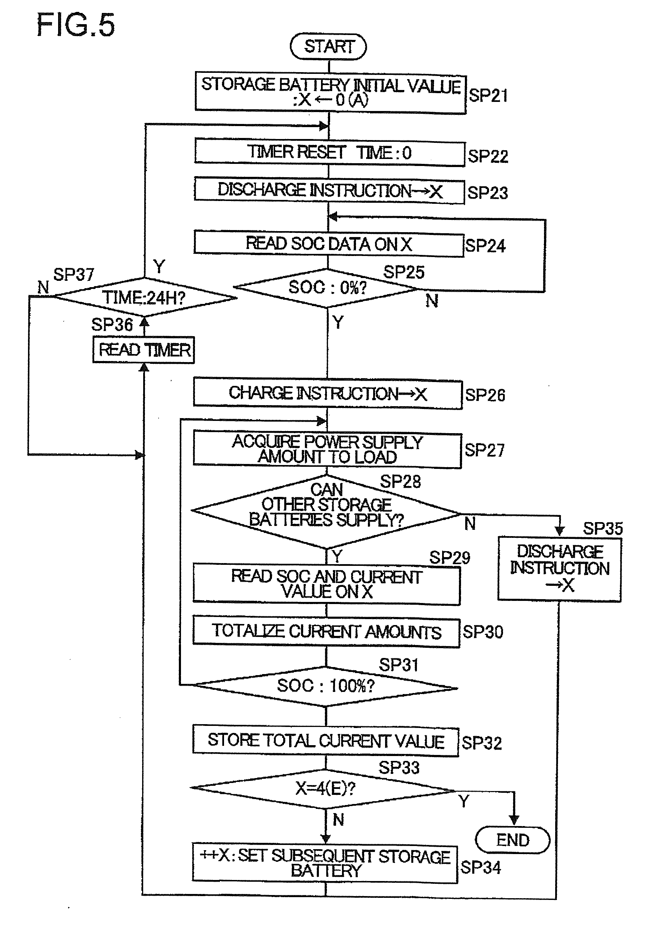

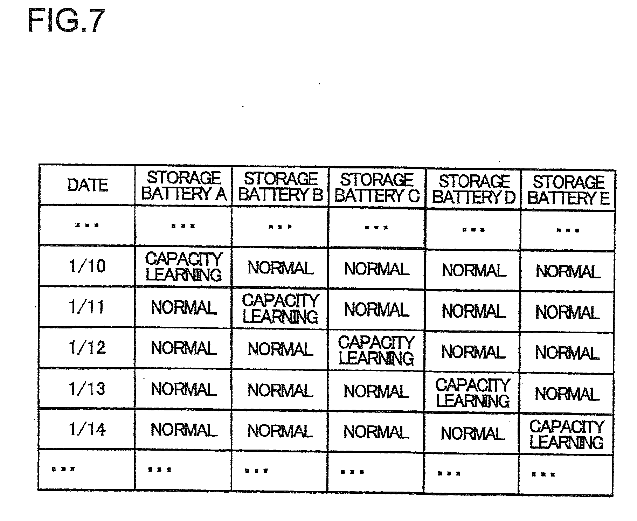

In the device described above, the system controller 7 provides, according to the control of Fig. 4, an instruction to start the capacity learning to the master controller 15, and the master controller 15 performs capacity learning control according to the flow of Fig. 5. In the capacity learning control, as shown in Fig. 7, the capacity learning is performed on one storage battery pack 12 per day in principle such that the storage battery pack on which the capacity learning is performed is sequentially switched from a storage battery pack A to a storage battery pack B ..., the electrically storageable capacity of each storage battery pack 12 is actually measured and the master controller 15 updates electrically storageable capacity data on each storage battery pack stored in the memory M.

In other words, the memory M of the master controller holds, as the table, the capacity data measured last in each storage battery pack. The capacity learning as described above is performed about once every month or every two months, and thus it is possible to accurately grasp the capacity of the storage battery that is degraded with usage time.

While the capacity learning is being performed, the master controller 15 performs control so as to use only the other storage battery packs which are not performing the capacity learning and to supply power, and supplies the power required by the system controller 7. When the capacity learning is performed, sufficient power demand (what receives discharge) for discharge used for the capacity learning on the storage battery pack is necessary or as necessary, it is possible to perform power adjustment with another storage battery pack. Hence, by performing power demand prediction at the time of introduction of the system, it is preferable to form the power management system large enough to satisfy such necessity.

The operation of the system controller 7 will be described according to the flow of Fig. 4. In step SP1, timer reset is first performed. Then, in step SP2, the load-side information data S6 is read, and in step SP3, based on the read load-side information data, power that needs to be supplied to the load is predicted. In step SP4, an instruction is provided to the mater controller such that the predicted power amount is discharged. In step SP5, the value of the timer is checked.

The operations in steps SP2 to SP5 are repeatedly performed at predetermined intervals; when the value of the timer reaches 30 days, an instruction to start the capacity learning is provided to the master controller (step S6). Thereafter, the process returns again to step SP1, the timer is reset and the above operations are repeatedly performed. In this way, it is possible to perform the capacity learning on the five storage battery packs A to E connected to one power converter once per month.

### <First example>

In a first example, after the remaining amount of the storage battery pack that is the target of the capacity learning is made zero, data on the chargeable capacity is obtained by measuring the current amount until the storage battery pack is fully charged; with respect to the five storage battery packs A to E connected to one power converter, the capacity learning is sequentially performed on one storage battery pack per day. The system controller 7 provides an instruction to start the capacity learning to the master controller 15 once every month. When such an instruction is provided, the master controller 15 starts the capacity learning control of Fig. 5.

The storage battery pack A on which the capacity learning is performed is first specified as the initial value of the storage battery (step SP21). Here, the storage battery packs A to E are associated with 0 to 4, and a value corresponding to the storage battery pack that is the target of the capacity learning is set at a variable X. Hence, as the initial value of the variable X, the value "0" corresponding to the storage battery pack A is set.

Then, in step SP22, the timer is reset at zero. This timer is referenced when 24 hours elapse, that is, when the capacity learning on the subsequent storage battery is started. Thereafter, in step SP23, a discharge instruction is provided to a storage battery pack corresponding to X (hereinafter, a "storage battery pack X"). Then, the value of data on the SOC indicating the remaining amount transmitted sequentially from the storage battery pack X is read (step SP24), and in step SP25, whether or not the SOC reaches zero is repeatedly determined. In this way, the specified storage battery pack is discharged until the remaining amount reaches zero.

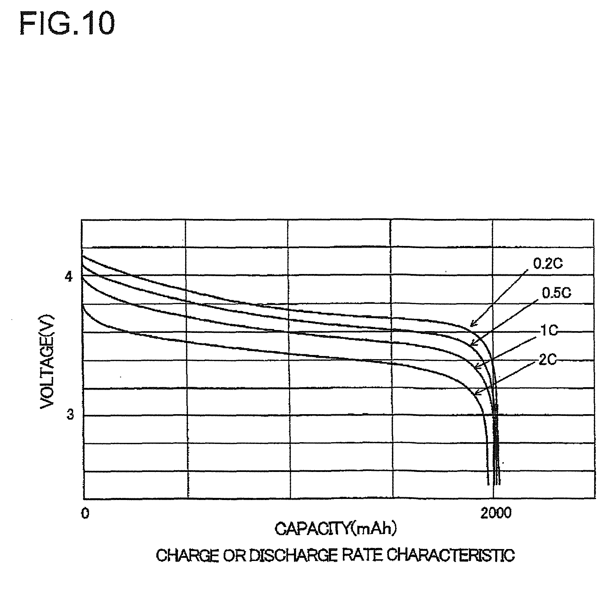

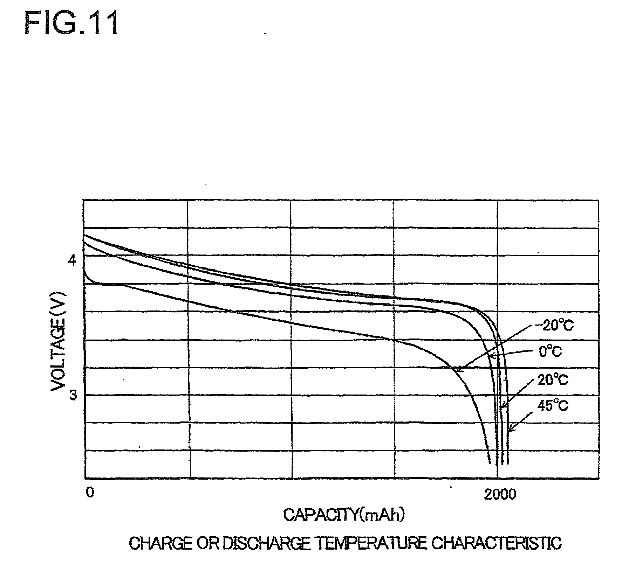

When in step SP25, the SOC is determined to reach zero, in step SP26, an instruction to perform charge is provided to the storage battery pack X. When the storage battery is charged or discharged, as shown in Fig. 10, a characteristic is given in which the voltage and the capacity draw different curves depending on a discharge rate (the current amount), that is, discharge per unit time performed by the storage battery. As shown in Fig. 11, the characteristic differs depending on the ambient temperature. Hence, the storage battery pack receiving the instruction in step SP26 is charged under such control that conditions such as the current and the temperature are constant. Although the output current at the time of the discharge and the like can be changed in the system as a whole so that the power demand is satisfied, in the storage battery pack that is the target of the capacity learning, the change is reduced, and the output settings of the other storage battery packs are adjusted, with the result that constant conditions are maintained.

Then, in step SP27, the power amount required for the storage battery packs A to E as a whole is acquired from the mater controller. Then, in step SP28, it is determined whether or not it is possible to supply the required power amount by the remaining four storage battery packs on which the capacity learning is not in the process of being performed.

If in step SP28, it is determined that it is impossible to supply the power amount, an instruction to perform discharge is provided to the storage battery pack X (step SP35), in step SP36, the process is placed on standby until 24 hours elapse in the timer, and the capacity learning is performed again on the same storage battery pack. On the other hand, if in step SP28, it is determined that it is possible to supply the power amount, the SOC and the current value in the storage battery pack X are read (step SP29), the amounts of current are totalized, and thus the power amount that has been actually stored is determined (step SP30). These steps SP27 to SP30 are repeatedly performed until the SOC reaches 100% (step SP31), and a total current value when the SOC reaches 100% is stored, as the electrically storageable capacity of the storage battery pack X, in a memory region corresponding to the storage battery pack X (step SP32). Then, in step SP33, it is determined whether or not the capacity learning has already been completed on the storage battery pack E, and if the capacity learning has already been completed on the storage battery pack E, the capacity learning processing is completed. If the capacity learning has not been completed on the storage battery pack E yet, the subsequent storage battery pack is set at the target on which the capacity learning is performed (step SP34), the value of the timer is monitored and the process is placed on standby until 24 hours elapse since the resetting (steps SP36 and SP37). If 24 hours have elapsed, the process returns to step SP22, and the same processing is repeatedly performed.

In this way, the following operation is performed. While the storage battery pack A that is the first target of the capacity learning is normally used by the subcontroller 14, the storage battery pack A is fully discharged, and is used until the SOC reaches zero.

On the other hand, the lower limit voltage of the discharge or the lower limit value (10%) of the value of the charge degree SOC are determined, and then the other storage battery packs B to E that are not the target are normally used. Then, a total current value until the SOC of the storage battery pack which is the target of the capacity learning reaches 100% from 0% is used as the electrically storageable capacity, and the data is updated. Hence, since it is impossible to perform discharge while one storage battery pack is being charged for the capacity learning, the required power is supplied by the remaining four storage battery packs.

Thus, when the system controller requires power that cannot be supplied by the four storage battery packs, the charge of the storage battery pack on which the capacity learning is being performed is stopped, and the power supply is performed by all the five storage battery packs. As described above, when the power supplied to the load higher than predicted is needed, the capacity learning operation on the storage battery that is the target of the capacity learning is stopped, and discharge is performed using all the batteries, with the result that it is possible to continuously supply stable power.

Then, when 24 hours have elapsed in the timer within the master controller since the storage battery pack that is the target started the capacity learning, if the stop described above has been performed, the capacity learning on the storage battery pack that has been stopped is started again whereas if the stop described above has not been performed, the storage battery pack B on which the capacity learning is subsequently performed is specified, and the same control is repeatedly performed.

The same processing as described above is performed sequentially on the storage battery packs C to E, and when the updating of the electrically storageable capacity data is completed on all the storage battery packs A to E, the master controller completes the capacity learning control. Then, the process is placed on standby until an instruction of the subsequent capacity learning is provided from the system controller to the master controller.

### <Second example>

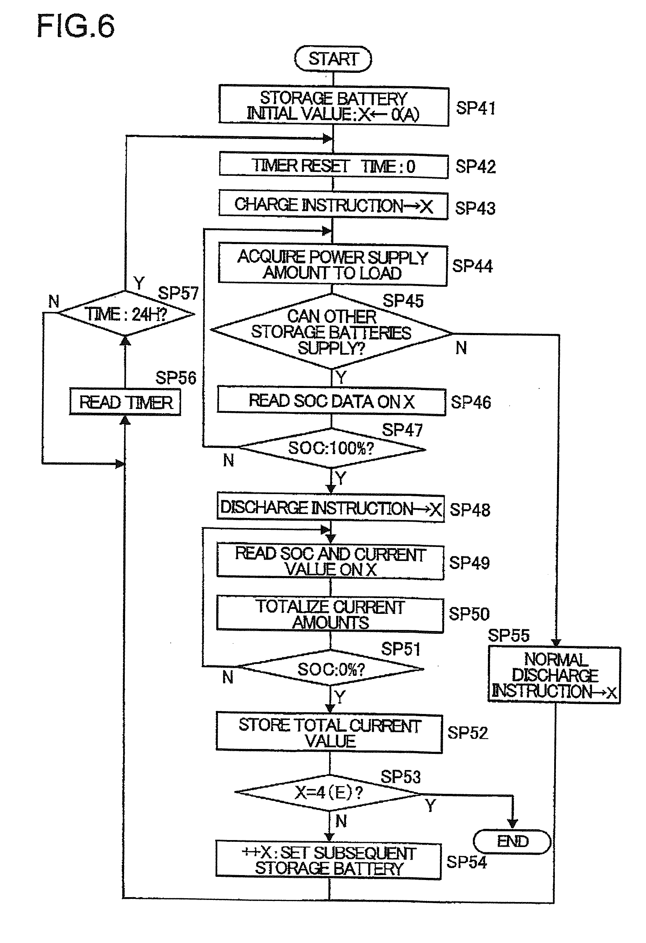

In a second example, after the storage battery pack that is the target of the capacity learning is fully charged, discharge is performed until the remaining amount reaches zero, in the meantime, the current amount is measured, and thus data on the chargeable capacity is obtained; with respect to the five storage battery packs A to E connected to one power converter, the capacity learning is sequentially performed on one storage battery pack per day. The system controller 7 provides an instruction to start the capacity learning to the master controller 15 once every month. When such an instruction is provided, the master controller 15 starts the capacity learning control of Fig. 6.

The storage battery pack A on which the capacity learning is performed is first specified as the initial value of the storage battery (step SP41). Here, the storage battery packs A to E are associated with 0 to 4, and a value corresponding to the storage battery pack that is the target of the capacity learning is set at a variable X. Hence, as the initial value of the variable X, the value "0" corresponding to the storage battery pack A is set.

Then, in step SP42, the timer is reset at zero. This timer is referenced when 24 hours elapse, that is, when the capacity learning on the subsequent storage battery is started. Thereafter, in step SP43, a charge instruction is provided to the storage battery pack X. Then, in step SP44, information on the supply amount of power required from the master controller for the storage battery packs A to E as a whole is acquired. Then, in step SP45, it is determined whether or not the required power amount by the remaining four storage battery packs on which the capacity learning is not in the process of being performed can be supplied. If in step SP45, it is determined that it is impossible to supply the power amount, an instruction to perform discharge is provided to the storage battery pack X (step SP55), in step SP56, the process is placed on standby until 24 hours elapse in the timer and the capacity learning on the same storage battery pack is performed again from step SP42.

On the other hand, if in step SP45, it is determined that it is possible to supply the power amount, the value of data on the SOC indicating the remaining amount transmitted sequentially from the storage battery pack X is read (step SP46), and in step SP47, whether or not the SOC reaches 100% is checked. If in step SP47, the SOC is not 100%, the process returns to step SP44, and the processing in steps SP44 to SP47 is repeatedly performed until the SOC reaches 100%. In this way, the specified storage battery pack is fully charged.

If in step SP47, it is determined that the SOC reaches 100%, in step SP48, an instruction to perform discharge is provided to the storage battery pack X. When the storage battery is charged or discharged, as shown in Fig. 10, a characteristic is given in which the voltage and the capacity draw different curves depending on a charge or discharge rate (the current amount). As shown in Fig. 11, the characteristic differs depending on the ambient temperature. Hence, the storage battery pack receiving the instruction in step SP48 is discharged under such control that conditions such as the current and the temperature are constant. Although the output current at the time of the discharge and the like can be changed in the system as a whole so that the power demand is satisfied, in the storage battery pack that is the target of the capacity learning, the change is reduced, and the output settings of the other storage battery packs are adjusted, with the result that constant conditions are maintained.

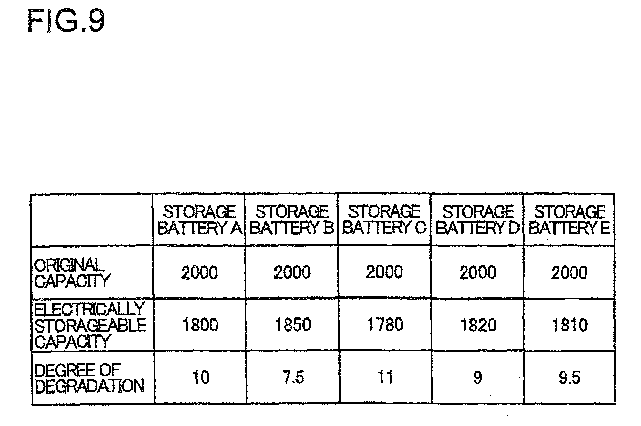

Then, the SOC and the current value in the storage battery pack X are read (step SP49), the amounts of current are totalized, and thus the power amount that has been actually discharged is determined (step SP50). These steps SP49 to SP50 are repeatedly performed until the SOC reaches 0% (step SP51), and the total current value when the SOC reaches 0% is stored, as the electrically storageable capacity of the storage battery pack X, in a memory region corresponding to the storage battery pack X (step SP52) as shown in Fig. 9.

Then, in step SP53, it is determined whether or not the capacity learning has already been completed on the storage battery pack E, and if the capacity learning has already been completed on the storage battery pack E, the capacity learning processing is completed. If the capacity learning has not been completed on the storage battery pack E yet, the subsequent storage battery pack is set at the target on which the capacity learning is performed (step SP54), the value of the timer is monitored and the process is placed on standby until 24 hours elapse since the resetting (steps SP56 and SP57).

If 24 hours have elapsed, the process returns to step SP42, and the same processing is repeatedly performed. In this way, the following operation is performed. While the storage battery pack A that is the first target of the capacity learning is charged by the subcontroller 14 until the storage battery pack A is fully charged. Since it is impossible to perform discharge while one storage battery pack is charged for the capacity learning, the required power is supplied by the remaining four storage battery packs.

However, when the system controller requires power that cannot be supplied by the four storage battery packs, the charge of the storage battery pack on which the capacity learning is being performed is stopped, and the power supply is performed by all the five storage battery packs.

When 24 hours have elapsed in the timer within the master controller since the storage battery pack that is the target started the capacity learning, if the stop described above has been performed, the capacity learning on the storage battery pack that has been stopped is started again. If the stop described above has not been performed, a total current value until the SOC of the storage battery pack which is the target of the capacity learning reaches 0% from 100% is used as the electrically storageable capacity, and the data is updated. Then, the storage battery pack B on which the capacity learning is subsequently performed is specified, and the same control is repeatedly performed. The same processing as described above is performed sequentially on the storage battery packs C to E, and when the updating of the electrically storageable capacity data is completed on all the storage battery packs A to E, the master controller completes the capacity learning control. Then, the process is placed on standby until an instruction of the subsequent capacity learning is provided from the system controller to the master controller.

### <Third example>

A third example is an example where the capacity learning is performed on each storage battery (cell). Although in the first and second examples described above, the case where the capacity learning is performed on each storage battery pack has been described, the present example is applied to the case where the capacity learning is performed on each storage battery (cell).

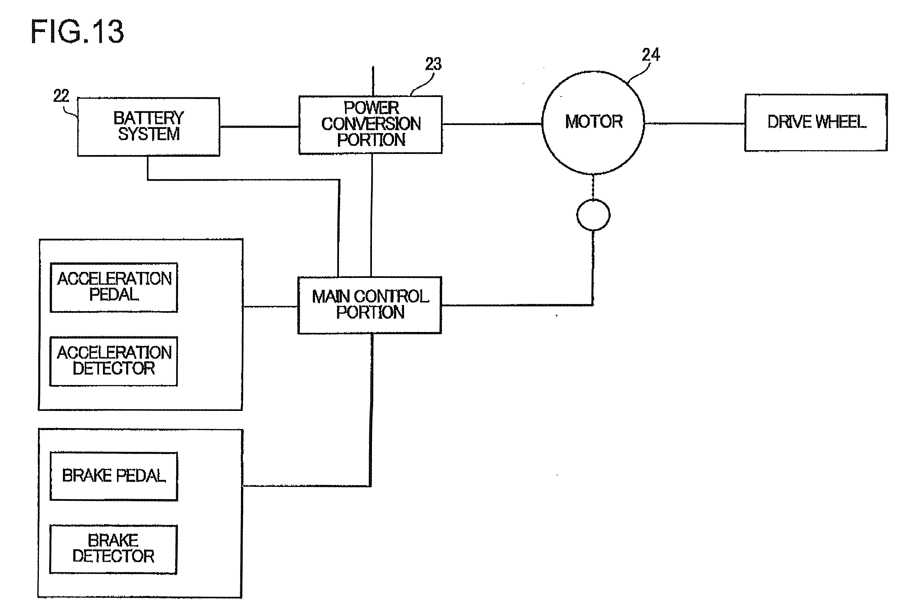

As shown in Fig. 13, in a mobile body such as an electric automobile, power is stored in a battery system 22 formed with a plurality of storage batteries (cells), the stored power is supplied through a power conversion portion 23 to a motor 24 and drive wheels are driven.

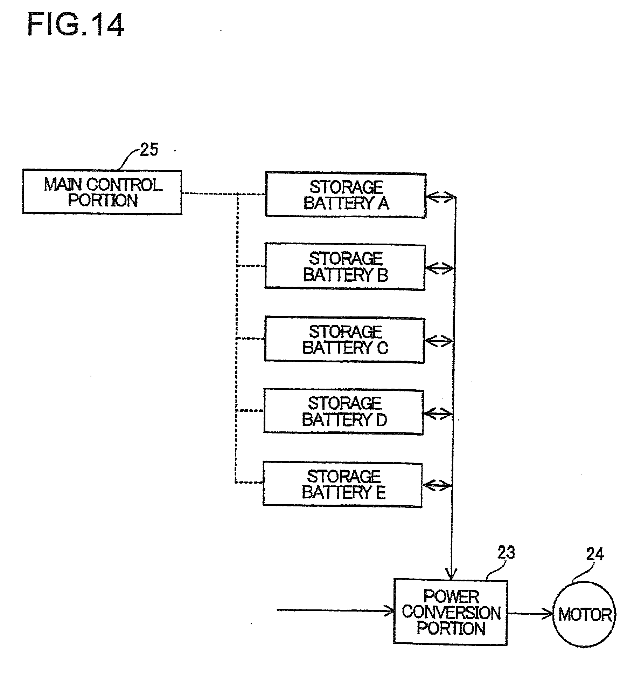

Fig. 14 is a block diagram of the battery system shown in Fig. 13. Here, dotted lines indicate control signal lines, and solid lines indicate power lines. In the battery system, the control signal lines are connected in parallel from a main control portion 25 to the individual storage batteries, and output control is individually performed on the storage batteries by the instructions from the main control portion 25.

Thus, the control described in the first and second examples can be performed on each storage battery (cell); when charge or discharge in a normal operation are performed, part of the storage battery system is charged or discharged under conditions suitable for the capacity learning, and a shortage and the like are adjusted by another secondary battery, with the result that it is possible to perform the capacity learning on the part of the batteries in the system. The storage batteries are divided into a plurality of parts, the capacity learning during the normal operation is sequentially performed and thus it is possible to perform the capacity learning on all the secondary batteries introduced into the system in a given period of time.

Although in the example described above, the capacity learning is sequentially performed on the storage battery packs every 24 hours, based on the prediction of power demand, the date and time when the capacity learning on each storage battery pack is started may be scheduled, and then the capacity learning may be performed. In this case, the power demand is not necessary constant every day, and the prediction of the power demand is likely to fail to be true; even if it is the day when the capacity learning is scheduled to be performed, when the power demand is increased beyond the prediction, and a shortage cannot be compensated for by another storage battery, the capacity learning for the day is cancelled, and the original purpose such as the peak cut is preferentially performed. In this case, the capacity learning is rescheduled to be performed at another date and time, and thus it is possible to stably use the system as a whole. If necessary charge power is lower than predicted, when discharge for the capacity learning is performed, another storage battery pack may be charged by the discharged current. Thus, it is possible to reduce the waste of the discharge current as a whole.

### <Fourth example>

A fourth example is an example on a method of determining the time when the capacity learning is started and the time when the capacity learning is stopped.

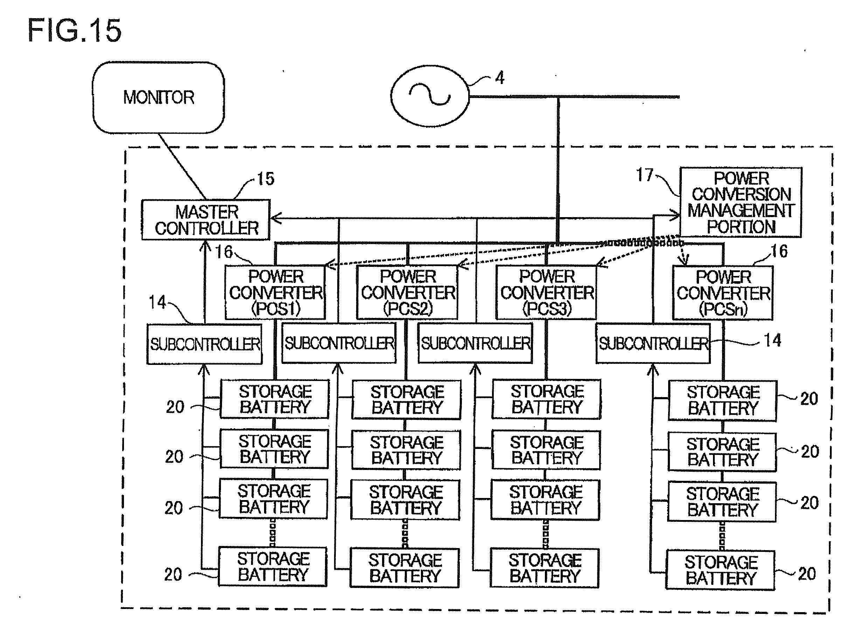

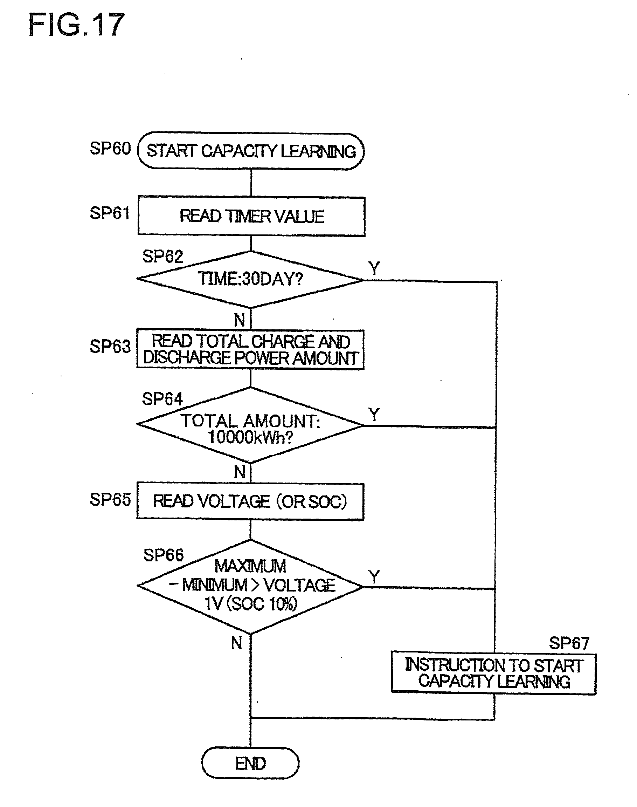

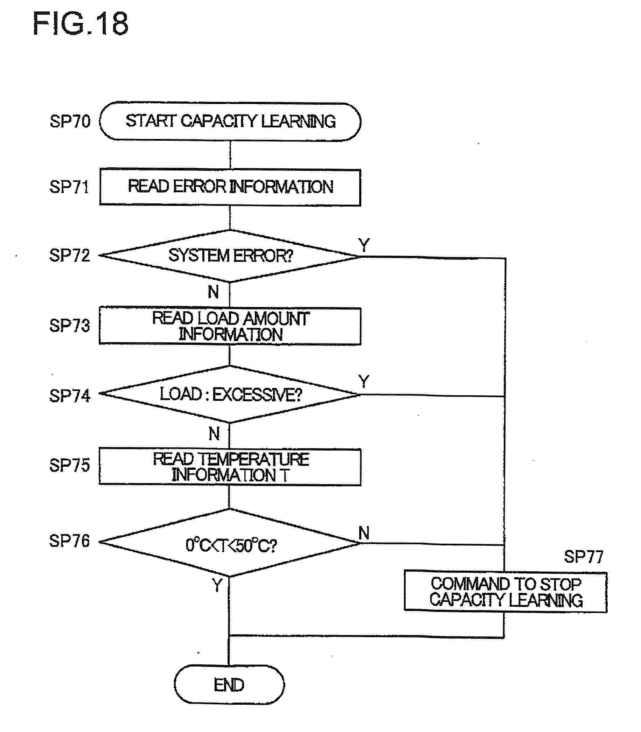

A description will be given based on an electrical storage system configured as shown in Fig. 15 and control flowcharts shown in Figs. 17 and 18.

The electrical storage system shown in Fig. 15 includes a plurality of power converters 16 (PCS1, PCS2, ... and PCSn), the power conversion management portion 17, the master controller 15 and the subcontrollers 14.

In the power converters 16, a plurality of storage batteries 20 are connected in series to each of the power converters 16, the system power 4 and the storage batteries 20 perform charge and discharge through the power converters 16 and thus power supply to the system power 4 and the storage of the power in the storage batteries 20 are performed. One power converter 16 and the storage batteries 20 connected in series are treated as one control unit, and the following processing of control on the capacity learning is performed.

In the control on the capacity learning, the transmission and reception of a control command, the exchange of control data and the like are performed through the communication of each device. For example, information on the storage battery 20 (information such as the voltage, the temperature and the SOC) is received by the subcontroller 14, and is transmitted to the master controller 15.

The power conversion management portion 17 performs control on charge and discharge by each power converter 16 based on a charge and discharge requirement from the system controller.

The start and stop of the capacity learning are determined by control described later and shown in Figs. 17 and 18, using data on the storage batteries stored in the memory M of the master controller 15, and are performed by the control command from the power conversion management portion 17.

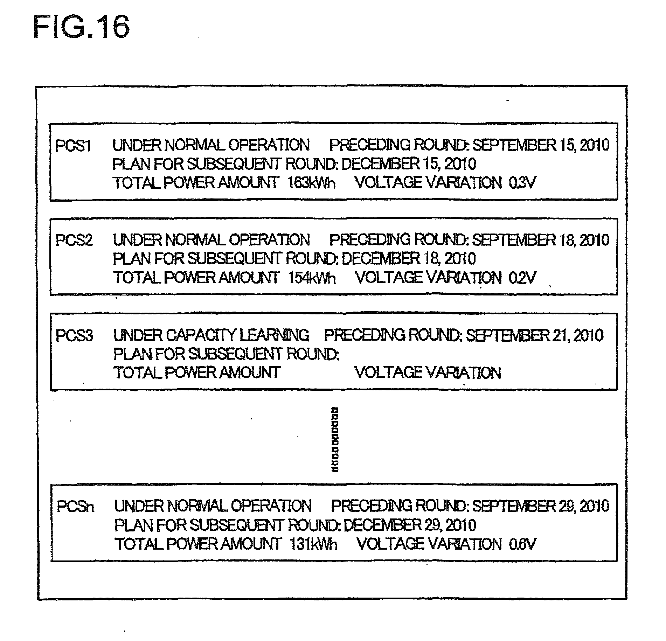

A display monitor can be connected to the master controller 15 or the power conversion management portion 17; the state of the capacity learning as shown in Fig. 16 is displayed. With respect to the display here, the state of the power converters (PCS1, PCS2, ... and PCSn) that are the units of the control is displayed, and the power converter that is in the process of performing the capacity learning, the date and time when the preceding capacity learning was performed, the schedule of the subsequent capacity learning and the like are displayed, with the result that the operation of the electrical storage system is notified to the user.

### -- Capacity learning start determination processing --

In capacity learning start determination processing, the control of the flowchart shown in Fig. 17 is performed at predetermined intervals with interrupt processing, and, based on an elapsed time since the preceding capacity learning, a total charge and discharge power amount and the variation (such as the difference between the maximum value and the minimum value or dispersion) in the voltage or the SOC within the series of the control unit, start timing on the capacity learning is determined by the following operation. Although in the present example, the case where this control is performed by the power conversion management portion 17 is described, the control may be performed by the master controller 15.

When an interrupt signal is input, the processing is started (step SP60), and the value of the timer is first read in step SP61. This timer is a timer that is reset when the preceding capacity learning is completed, and the value of the timer indicates the elapsed time since the completion of the preceding capacity learning. When the value of the timer read in step SP62 is compared with 30 days, if it exceeds 30 days, a start command for the capacity learning is issued in step SP67, and the interrupt processing is completed.

If in step SP62, the value of the timer is determined not to exceed 30 days, in step SP63, the value of the total charge and discharge power amount is read. Whether or not the value of the total charge and discharge power amount exceeds 10000 kWh is checked (step SP64). If the value of the total charge and discharge power amount exceeds 10000 kWh, in step SP67, the command for starting the capacity learning is issued, and the interrupt processing is completed. If in step SP64, the value of the total charge and discharge power amount is determined not to exceed 10000 kWh, in step SP65, the value of the voltage of each storage battery is read. Whether or not the difference between the maximum value of and the minimum value of the value of each voltage that has been read exceeds 1 V is checked (step SP66). If the difference exceeds 1 V, that is, the variation in the voltage of the storage battery is determined to be 1 V or more, in step SP67, the command for starting the capacity learning is issued, and the interrupt processing is completed. If in step SP66, the difference is determined not to exceed 1 V, the command is not issued, and the interrupt processing is completed. The processing in steps SP60 to SP67 described above is repeatedly performed each time the interrupt signal is input.

The start of the subsequent capacity learning is determined using the elapsed time since the preceding capacity learning, and thus, even if the frequency of use of the electrical storage system is low, since the capacity learning is performed for a given period of time, it is possible to periodically and stably calculate the capacity corresponding to the storage degradation of the storage battery.

By using the total discharge power amount for determining the start of the capacity learning, it is possible to perform the capacity learning at an early stage under conditions in which the frequency of the use is high and the degradation caused by the charge and discharge is more likely to proceed, and to reflect the condition of the degradation. Here, although the values of a current and a voltage for the calculation of the total charge and discharge power amount are likely to be measurement values within the storage batteries, measurement values in the series such as the power converters or the like, the values are preferably places (values) where a charge and discharge power amount in the unit of control can be measured.

Although in steps SP65 and SP66 of the processing described above, the variation in the voltage of the storage battery is checked, the variation in the SOC (the remaining amount) of each storage battery may be checked. For example, if in step SP65, the value of the SOC is read, and if in step SP66, the difference between the maximum and the minimum of the SOC is 10% or more, in step SP67, the command for providing an instruction to start the capacity learning is issued, and the interrupt processing is completed.

When the variation in the voltage of the storage battery or the variation in the SOC is calculated, it is preferable to perform the calculation under the same conditions such as the case where the charge and discharge are not performed or the case where a charge and discharge value (the current amount) is constant, and the voltage values are compared under the same conditions, and thus the result of the comparison is stabilized. Furthermore, with consideration given to temperature condition and the like, it is possible to perform more stable comparison.

Since as the variation in the voltage of the storage battery is increased, the efficiency of the entire electrical storage system is lowered, when the capacity learning is performed, balancing adjustment for making constant the voltage value of each storage battery is performed together with the capacity learning. In this case, when the difference between the maximum value and the minimum value, the dispersion of the voltage values or the like is equal to or more than a threshold value, with reference to the variation in the voltage within the series in the control unit, the capacity learning and the voltage balancing are performed, and thus it is possible to enhance the stability of the use of the electrical storage system. In the balancing adjustment, the connection of the power converters is temporarily disconnected, the voltages (open voltages) of the storage batteries are monitored until the voltages are stabilized, a target voltage of the balancing is determined after the stabilization and thus it is possible to enhance the accuracy of the balancing.

Although in the capacity learning processing described above, the determination is made based on the satisfaction of any one of the three conditions, a single item or a combination of two items may be used. Parameters for determining the total power amount, the voltage of the storage battery and the variation in the SOC are reset when the capacity learning is completed; the total power amount and the degree of change of the voltage variation from the preceding capacity learning are referenced, and, when the total power amount and the voltage variation are preset threshold values or more, the command for staring the capacity learning is issued.

The parameters for determining the total power amount, the voltage of the storage battery and the variation in the SOC may be reset every day, and the total power amount per day and the degree of change of the voltage variation per day are referenced, and thus it is possible to take a quick action for the change. When the command for starting the capacity learning is issued, the capacity learning of Fig. 5 or Fig. 6 is started. When the capacity learning is completed, the value of the timer is reset.

### -- Capacity learning stop processing --

Capacity learning stop processing will now be described. In the capacity learning stop processing, when in the middle of the capacity learning, a system error occurs, the load is excessively large (the case where the amount of load is large, and only the other storage batteries which are not in the process of performing the capacity learning cannot handle it) or the temperature condition is higher or lower than a predetermined temperature, the processing for stopping the capacity learning is performed. The capacity learning stop processing determines the stop of the capacity learning by the interrupt processing and the control corresponding to the flowchart shown in Fig. 18, based on the occurrence of a system error, the load information and the temperature information.

When the processing is started by the interrupt signal (step SP70), in step SP71, error information is first read, and in step SP72, whether or not a system error occurs is determined. If the system error is determined to occur, in step SP77, the capacity learning stop command is issued, and the interrupt processing is completed.

If in step SP72, the system error is determined not to occur, in step SP73, information on the amount of load is read; if in step SP74, it is determined that the amount of load is larger than a predetermined value, that is, the load is excessively large, in step SP77, the capacity learning stop command is issued, and the interrupt processing is completed.

If in step SP74, the amount of load is determined to be lower than the predetermined value, in step SP75, temperature information T is read, and whether or not the temperature information T that has been read is equal to or more than 0°C but equal to or less than 50°C is determined (step SP76). If it is determined that the temperature information T is not equal to or more than 0°C but equal to or less than 50°C, in step SP77, the capacity learning stop command is issued, and the interrupt processing is completed. If in step SP76, it is determined that the temperature information T is equal to or less than 0°C or equal to or more than 50°C, the capacity learning stop command is not issued, and the interrupt processing is completed.

In the processing described above, when the system error occurs, since the operation is preferentially returned to the normal operation, it is possible to stop the capacity learning. Although when the capacity learning is performed, part of the batteries are separated from the normal use, if the load is so large that the remaining batteries cannot handle the charge or discharge requirement, it is possible to stop the capacity learning and return the storage battery performing the capacity learning to the normal use. Furthermore, if the temperature condition greatly differs from the normal, since the battery characteristics differ from each other, the calculated SOH is unlikely to be effective; if the temperature condition differs from the normal use and exceeds a predetermined threshold value, the capacity learning is stopped.

The time when the capacity learning is started may be determined based on the number of times (the number of cycles) the charge and discharge are performed. For example, preferably, when the charge and discharge are performed 100 times, the capacity learning may be started once.

In the present invention, it is possible to calculate the degree of degradation corresponding to the variation in the capacity of each battery while performing the charge and discharge control on the system, to use it for determining the life of the battery and estimating the remaining capacity, to enhance the accuracy of the estimation of the power supply possible amount in the entire power management system and to improve the stability of the charge and discharge control.

In the example described above, in the capacity learning, the current values are totalized until the value of the SOC reaches 100% (full charge) from 0% (fully discharged state) or until the value of the SOC reaches 0% (fully discharged state) from 100% (fully charged state), and thus the chargeable capacity value is determined; in the fully discharged state or the fully charged state, the value of the SOC may not necessarily be 0% or 100%. Specifically, as compared with a range in which a normal storage battery is normally used, the chargeable capacity is measured between values that are relatively close to 0% and 100%, and thus it is possible to obtain the effects of the present invention; for example, the values of the SOC may be set at 3% and 97%.

### «Second embodiment»

A second embodiment of the present invention will be described with reference to accompanying drawings. In each drawing that is referenced, like parts are identified with like symbols, and their description will not be repeated in principle. In the present specification, for ease of description, information, signals, physical amounts, state amounts, members and the like are represented by signs and symbols, and thus the names of the information, the signals, the physical amounts, the state amounts, the members and the like that correspond to the signs and the symbols may be omitted or abbreviated. Unless otherwise a contradiction arises, what has been described in the first embodiment including the first to fourth examples can be applied to the second embodiment; however, when the technology of the second embodiment is interpreted, what will be described in the second embodiment prioritizes what has been described in the first embodiment.

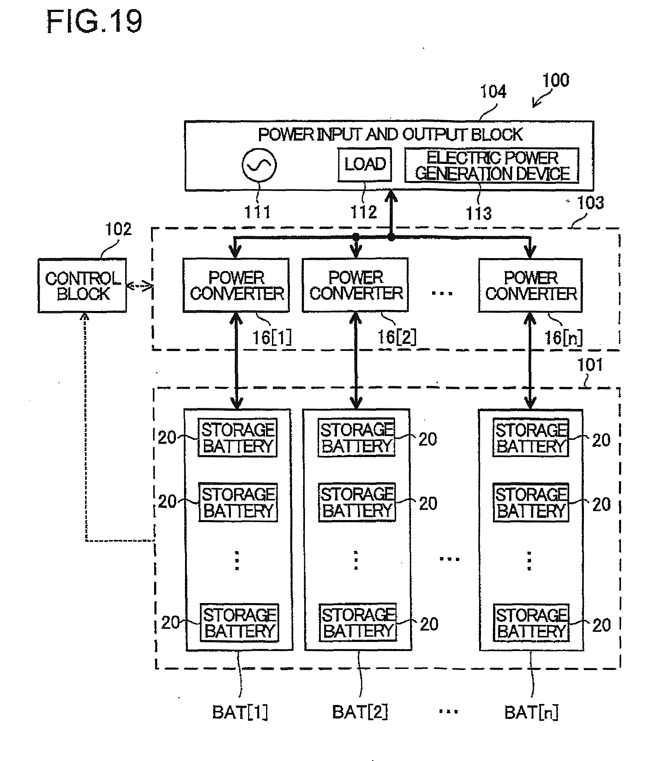

Fig. 19 is a schematic configuration diagram of an electrical storage system 100 according to the second embodiment. The electrical storage system 100 includes an electrical storage block 101, a control block 102 and a power conversion block 103. A power input and output block 104 is connected to the electrical storage system 100. The system 100 can include all or part of the block 104. The electrical storage block 101 includes n storage battery packs BATs; the power conversion block 103 includes n power converters 16. Here, n is an integer of 2 or more. The n storage battery packs BATs are connected parallel to each other through the n power converters 16. The power converters 16 in the power conversion block 103 may be the same as the power converters 16 described in the first embodiment. The storage battery packs BATs may be the same as the storage battery packs 12 in the first embodiment.

Each storage battery pack BAT is formed with a plurality of storage batteries 20 that are connected in series. Each storage battery pack BAT may include only one storage battery 20 or may include the parallel connection circuit of a plurality of storage batteries 20. As described in the first embodiment, the storage battery 20 is a lithium-ion battery, a nickel-metal hydride battery or the like. In the second embodiment, unless otherwise particularly described, charge and discharge refer to the charge and discharge of the storage batteries 20 within the electrical storage block 101. The n storage battery packs BATs are particularly represented by symbols BAT[1] to BAT[n]; the power converter 16 within the power conversion block 103 that is connected to the storage battery pack BAT[i] is represented by a symbol 16[i] (i is an integer). The switch substrate 13 described in the first embodiment may be interposed between the storage battery pack BAT[i] and the power converter 16[i] (see Fig. 2).

The power input and output block 104 is a block that, through the power conversion block 103, receives the supply of discharge power from the electrical storage block 101 or supplies charge power to the electrical storage block 101, and includes a power source 111, a load 112 and an electric power generation device 113. The power source 111 is a commercial alternating-current power source that corresponds to the system power 4 of the first embodiment. The load 112 may be the same as the load 5 of the first embodiment. The electric power generation device 113 generates power based on an arbitrary energy source (for example, a natural energy such as sunlight or a fossil fuel) to output the generated power. The block 104 may not include the electric power generation device 113.

The power conversion block 103 performs power conversion processing including power conversion for converting the discharge power from the electrical storage block 101 into output power to the block 104 and power conversion for converting the power from the block 104 into charge power for the electrical storage block 101. The power conversion block 103 may also be interposed between the power source 111 or the electric power generation device 113 and the load 112; power conversion for converting the power from the power source 111 or the electric power generation device 113 into supply power to the load 112 may be included in the power conversion processing in the block 103. The power conversion processing in the block 103 is controlled by the control block 102.

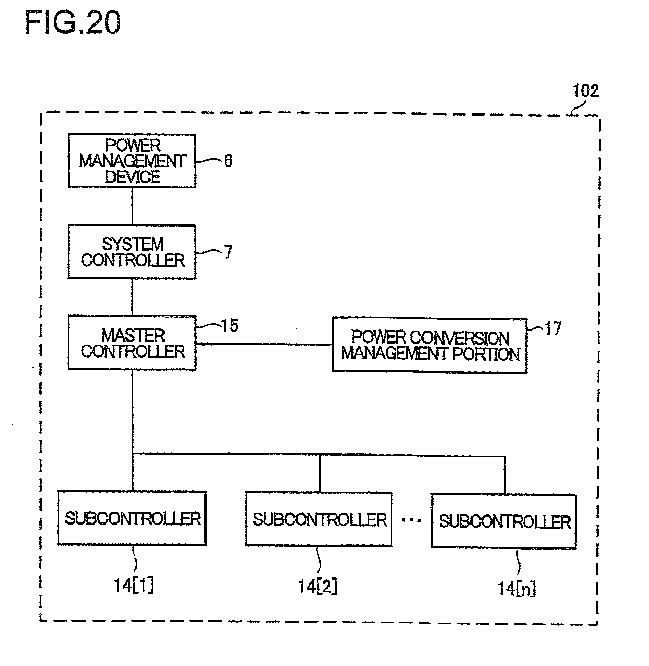

Fig. 20 is an internal configuration block diagram of the control block 102. As shown in Fig. 20, in the control block 102, the power management device 6, the system controller 7, the master controller 15, the power conversion management portion 17 and the subcontrollers 14, which have been described in the first embodiment (see Figs. 1 and 2), can be provided. In the control block 102, as n subcontrollers 14, the subcontrollers 14 [1] to 14[n] are provided. The subcontrollers 14 [1] to 14[n] are subcontrollers that correspond to the storage battery packs BAT[1] to BAT[n], respectively. It can be considered that the subcontrollers 14 are provided within the storage battery packs BATs; here, for ease of description, it is considered that the subcontrollers 14 are provided outside the storage battery packs BATs (in fact, the storage battery pack BAT and the subcontroller 14 are held within an integral case, and they can constitute a storage battery unit).

Each subcontroller 14 acquires storage battery pack state data including the state data on the corresponding storage battery pack BAT, and transmits it to the master controller 15. Within the electrical storage system 100, in each of the storage battery packs BATs, a voltage senor that measures the terminal voltage value (hereinafter referred to as a pack voltage value) of the storage battery pack BAT, a current sensor that measures the current value (hereinafter referred to as a pack current value) of charge or discharge flowing through the storage battery pack BAT and a temperature sensor that measures the temperature (hereinafter referred to as a pack temperature) of the storage battery pack BAT are provided; their measurement values are acquired by the subcontroller 14. The pack voltage value corresponds to the total value of the terminal voltages of the storage batteries 20 that constitute the storage battery pack BAT and that are connected in series. Each subcontroller 14 calculates, based on the pack voltage value and the pack current value of the corresponding storage battery pack BAT, the SOC (state of charge) that is the degree of charge of the corresponding storage battery pack BAT. The storage battery pack state data includes the pack voltage value, the pack current value, the pack temperature and the SOC of the storage battery pack BAT. The SOC of the storage battery pack BAT represents, as is known, a ratio of the remaining capacity of the storage battery pack BAT to the full charge capacity of the storage battery pack BAT.

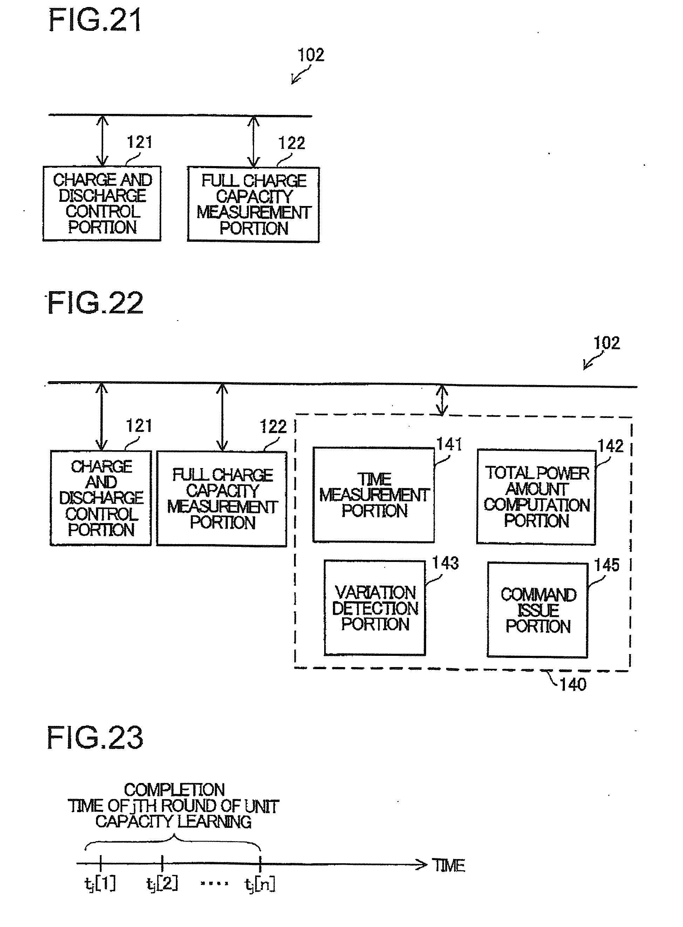

Fig. 21 is an internal functional block diagram of the control block 102. The control block 102 includes a charge and discharge control portion 121 and a full charge capacity measurement portion 122. The charge and discharge control portion 121 is formed with an arbitrary plurality of portions (mainly, for example, the master controller 15 and the power conversion management portion 17) shown in Fig. 20; the full charge capacity measurement portion 122 is also formed with an arbitrary plurality of portions (mainly, for example, the subcontrollers 14[1] to 14[n] or the subcontrollers 14[1] to 14[n] and the master controller 15) shown in Fig. 20.

Based on various indexes including the storage battery pack state data, the charge and discharge control portion 121 performs the charge and discharge control on each storage battery pack BAT through the control on the power conversion processing in the power conversion block 103.

The full charge capacity measurement portion 122 is a portion that performs the capacity learning described previously, and works with the charge and discharge control portion 121 and the power conversion block 103 to measure the full charge capacity of each storage battery pack BAT. Processing for measuring the full charge capacity of one storage battery pack BAT is referred to as unit capacity learning (hence, the performance of the unit capacity learning on the storage battery pack BAT[i] is synonymous with the measurement of the full charge capacity of the storage battery pack BAT[i]). The storage battery pack BAT (that is, the storage battery pack of the measurement target) whose full charge capacity is measured by the unit capacity learning is hereinafter referred to as a measurement target pack. The measurement portion 122 can use first or second unit capacity learning as the unit capacity learning.

The first unit capacity learning is the same as described in the first example described above. Specifically, while in the first unit capacity learning, the storage battery pack state data on the measurement target pack is being monitored, the measurement portion 122 uses the power conversion block 103 to fully discharge the measurement target pack (that is, to bring the measurement target pack into the fully discharged state), and thereafter the measurement target pack is charged until the measurement target pack is brought into the fully charged state. In this case, the measurement portion 122 determines the full charge capacity of the measurement target pack based on the total amount of the pack current values of the measurement target pack in a period of time during which the fully discharged state of the measurement target pack is brought into the fully charged state.

The second unit capacity learning is the same as described in the second example discussed above. Specifically, while in the second unit capacity learning, the storage battery pack state data on the measurement target pack is being monitored, the measurement portion 122 uses the power conversion block 103 to bring the measurement target pack into the fully charged state by charge of the measurement target pack, and thereafter the measurement target pack is discharged until the measurement target pack is brought into the fully discharged state. In this case, the measurement portion 122 determines the full charge capacity of the measurement target pack based on the total amount of the pack current values of the measurement target pack in a period of time during which the fully charged state of the measurement target pack is brought into the fully discharged state.

In the first unit capacity learning, the measurement portion 122 may charge the measurement target pack such that the charge current and the temperature (pack temperature) of the measurement target pack are kept constant. In order to realize this, the measurement portion 122 may adjust, as necessary, the charge or discharge power of the storage battery pack BAT other than the measurement target pack. Likewise, in the second unit capacity learning, the measurement portion 122 may discharge the measurement target pack such that the discharge current and the temperature (pack temperature) of the measurement target pack are kept constant. In order to realize this, the measurement portion 122 may adjust, as necessary, the charge or discharge power of the storage battery pack BAT other than the measurement target pack.

In the performance process of the first and second unit capacity learning, under control of the charge and discharge control portion 121, the discharge power of the measurement target pack may be supplied to the load 112 or may be supplied to the storage battery pack BAT other than the measurement target pack (that is, the storage battery pack BAT other than the measurement target pack may be charged by the discharge power of the measurement target pack). In the performance process of the first and second unit capacity learning, under control of the charge and discharge control portion 121, the charge power of the measurement target pack is supplied from the power source 111, the electric power generation device 113 or the storage battery pack BAT other than the measurement target pack.

The state where the SOC of the storage battery pack BAT is 0% corresponds to the fully discharged state of the storage battery pack BAT; the state where the SOC of the storage battery pack BAT is 100% corresponds to the fully charged state of the storage battery pack BAT. As described in the first embodiment, for example, the state where the SOC of the storage battery pack BAT is 3% is made to correspond to the fully discharged state of the storage battery pack BAT, and the state where the SOC of the storage battery pack BAT is 97% is made to correspond to the fully charged state of the storage battery pack BAT, and then the first and second unit capacity learning may be performed.

Balancing adjustment for uniformizing the terminal voltages of the storage batteries 20 forming the measurement target pack may be included in the first and second unit capacity learning. The details of the balancing adjustment may be the same as in the first embodiment or a known method (for example, a uniformizing method disclosed in international publication WO/2011/105083) can be utilized as the balancing adjustment.

The value determined in the first unit capacity learning is the chargeable capacity (the maximum electric capacity that can be accumulated in the measurement target pack) of the measurement target pack; the value determined in the second unit capacity learning is the dischargeable capacity (the maximum electric capacity that can be discharged by the measurement target pack having a SOC of 100%) of the measurement target pack. Although strictly speaking, the chargeable capacity and the dischargeable capacity can differ slightly, the chargeable capacity and the dischargeable capacity each are one type of full charge capacity.

The unit capacity learning in the following description may be either of the first unit capacity learning and the second unit capacity learning. In a memory (not shown) provided in the control block 102, the latest full charge capacity of each storage battery pack BAT is preferably held. In the second embodiment, as in the first embodiment, in order for the original discharge function of and the original electrical storage function of the electrical storage block 101 to be prevented from failing to be utilized during the capacity learning, the measurement portion 122 measures the full charge capacity of each storage battery pack BAT while switching the storage battery pack BAT that is the measurement target pack, among the storage battery packs BAT[1] to BAT[n].

The charge and discharge control portion 121 can normally operate one or more storage battery packs BATs other than the measurement target pack, among the storage battery packs BAT[1] to BAT[n]; the storage battery pack BAT that is normally operated is particularly referred to as a normal operation pack. The charge and discharge control portion 121 can also set one or more storage battery packs BATs at a standby pack. The standby pack is a storage battery pack BAT other than the measurement target pack and the normal operation pack; the charge and discharge control portion 121 does not perform the charge and discharge on the standby pack. The number of standby packs may be zero.

The charge and discharge control by the charge and discharge control portion 121 includes the discharge control and the charge control. On the assumption that n = 4, that the storage battery packs BAT[1] to BAT[3] are the normal operation packs and that the storage battery pack BAT[4] is the measurement target pack, the discharge control and the charge control will be described. The number of measurement target packs may be 2 or more.

Specifically, for example, in the discharge control, the charge and discharge control portion 121 determines, based on the power consumption amount of the load 112 connected to the electrical storage system 100, a discharge power amount (the instruction amount of discharge power) P_{D}* necessary to be supplied from the electrical storage block 101 to the load 112, and controls the power conversion block 103 such that the determined discharge power amount P_{D}* is supplied from the electrical storage block 101 to the load 112. However, the measurement target pack BAT[4] is not utilized for the discharge control. In other words, in the discharge control, the charge and discharge control portion 121 controls the power conversion block 103 such that the discharge power amount P_{D}* is supplied from the normal operation packs BAT[1] to BAT[3] to the load 112.

As is obvious from the above description, the discharge control is also performed in a period of time during which the unit capacity learning is performed on any of storage battery packs BATs. In other words, in a period of time during which the measurement portion 122 measures the full charge capacity of any of the storage battery packs BATs (that is, in a period of time during which the unit capacity learning is performed on the measurement target pack BAT[4]), the charge and discharge control portion 121 can make the normal operation packs BAT[1] to BAT[3] perform discharge by the discharge control. In this way, it is possible to perform the capacity learning without a power supply function to the load 112 being degraded.

If it is determined that, based on the storage battery pack state data on the normal operation packs BAT[1] to BAT[3], the discharge power amount P_{D}* is larger than the power amount that can be discharged in the normal operation packs BAT[1] to BAT[3], the charge and discharge control portion 121 stops the measurement of the full charge capacity by the measurement portion 122, incorporates the storage battery pack BAT[4] that has been the measurement target pack into the normal operation pack such that the discharge power amount P_{D}* is supplied to the load 112 using the packs BAT[1] to BAT[4] and makes the storage battery pack BAT[4] also perform discharge together with the storage battery packs BAT [1] to BAT[3]. Thus, it is possible to stably and continuously supply power to the load 112. Immediately before being incorporated into the normal operation pack, the pack BAT[4] that is incorporated into the normal operation pack for performing discharge and that performs discharge may be the measurement target pack charged in the unit capacity learning or may be the measurement target pack discharged in the unit capacity learning.

The power consumption amount utilized for determining the discharge power amount P_{D}* may be the actual measurement value of the power consumption amount of the load 112 or may be the prediction value of the power consumption amount of the load 112. Based on the history data on the power consumption amount of the load 112, the day of the date when the prediction is performed, weather data in the time when the prediction is performed and the like, a prediction portion (not shown) in the control block 102 uses a known method, and thereby can predict the power consumption amount of the load 112 in an arbitrary time. The charge and discharge control portion 121 may use the prediction value to determine the discharge power amount P_{D}* in the time described above.

After the unit capacity learning on the storage battery pack BAT[4] is stopped, and the storage battery pack BAT[4] is made to perform discharge, when the discharge power amount P_{D}* is decreased to such a degree that the packs BAT [1] to BAT[3] can cover the discharge power amount P_{D}*, the measurement portion 122 can perform again the unit capacity learning on the storage battery pack BAT[4]. However, preferably, in this case, in order to cope with a case where the power consumption amount of the load 112 is increased again contrary to the prediction or in order to wait until the pack voltage value of the storage battery pack BAT[4] is stabilized, after the discharge power amount P_{D}* is decreased to such a degree that the packs BAT [1] to BAT[3] can cover the discharge power amount P_{D}*, a predetermined time further elapses, and then the measurement portion 122 performs again the unit capacity learning on the storage battery pack BAT[4].

For example, in the charge control, the charge and discharge control portion 121 determines, based on the supply power amount of the charging source (111 or 113) connected to the electrical storage system 100, a charge power amount (the instruction amount of the charge power) P_{C}* from the charging source to the electrical storage block 101, and controls the power conversion block 103 such that the determined charge power amount P_{C}* is supplied from the charging source to the electrical storage block 101. However, the measurement target pack BAT[4] is not utilized for the charge control. In other words, in the charge control, the charge and discharge control portion 121 controls the power conversion block 103 such that the charge power amount P_{C}* is supplied from the charging source to the normal operation packs BAT[1] to BAT[3].

As is obvious from the above description, the charge control is also performed in a period of time during which the unit capacity learning is performed on any of the storage battery packs BATs. In other words, in a period of time during which the measurement portion 122 measures the full charge capacity of any of the storage battery packs BATs (that is, in a period of time during which the unit capacity learning is performed on the measurement target pack BAT[4]), the charge and discharge control portion 121 can make the normal operation packs BAT[1] to BAT[3] perform charge by the charge control. In this way, it is possible to perform the capacity learning without the electrical storage function of the electrical storage system 100 being degraded.

If it is determined that, based on the storage battery pack state data on the normal operation packs BAT[1] to BAT[3], the charge power amount P_{C}* is larger than the power amount that can be charged in the normal operation packs BAT[1] to BAT[3], the charge and discharge control portion 121 stops the measurement of the full charge capacity by the measurement portion 122, incorporates the storage battery pack BAT[4] that has been the measurement target pack into the normal operation pack such that the charge power amount P_{C}* is supplied to the entire packs BAT[1] to BAT[4] and makes the storage battery pack BAT[4] also perform charge together with the storage battery packs BAT [1] to BAT[3]. Thus, it is possible to store the power from the charging source without any waste. Immediately before being incorporated into the normal operation pack, the pack BAT[4] that is incorporated into the normal operation pack for performing charge and that performs charge may be the measurement target pack charged in the unit capacity learning or may be the measurement target pack discharged in the unit capacity learning.

At least one of the power source 111 and the electric power generation device 113 can serve as the above-described charging source (the charging source for charging the normal operation pack). When the power source 111 is included in the charging source, the charge and discharge control portion 121 may determine the charge power amount P_{C}* based on the usage charge of the power form the power source 111 and the like. When the electric power generation device 113 is included in the charging source, the charge and discharge control portion 121 preferably determines the charge power amount P_{C}* based on the electric power generation power amount of the electric power generation device 113.

After the unit capacity learning on the storage battery pack BAT[4] is stopped, and the storage battery pack BAT[4] is made to perform charge, when the charge power amount P_{C}* is decreased to such a degree that the packs BAT [1] to BAT[3] can charge all the charge power amount P_{C}*, the measurement portion 122 can perform again the unit capacity learning on the storage battery pack BAT[4]. However, preferably, in this case, in order to cope with a case where the supply power amount (the electric power generation power amount of the electric power generation device 113) of the charging source is increased again contrary to the prediction or in order to wait until the pack voltage value of the pack BAT[4] is stabilized, after the charge power amount P_{C}* is decreased to such a degree that the packs BAT [1] to BAT[3] can charge all the charge power amount P_{C}*, a predetermined time further elapses, and then the measurement portion 122 performs again the unit capacity learning on the storage battery pack BAT[4].

In a period of time during which the unit capacity learning is performed on the storage battery pack BAT[i] (a period of time during which the full charge capacity of the storage battery pack BAT[i] is measured), when it is confirmed that the pack temperature of the pack BAT[i] deviates from a predetermined temperature range (for example, a range of 0°C to 50°C), the measurement portion 122 may stop the measurement of the full charge capacity of the storage battery pack BAT[i], for example, because it is difficult to assure the accuracy of the measurement.

Further specific examples and applications of the electrical storage system 100 will be described in fifth to ninth examples below. What has been described above in the second embodiment can all be applied to the fifth to ninth examples unless otherwise a contradiction arises. Unless otherwise a contradiction arises, among the fifth to ninth examples, an arbitrary plurality of examples can be combined.

### <Fifth example>

A fifth example will be described. Fig. 22 is an internal functional block diagram of the control block 102 according to the fifth example. In the control block 102, a parameter detection portion 140 is provided (the same is true for the other examples which will be described later). The parameter detection portion 14 is formed with the subcontrollers 14[1] to 14[n] or is formed with the subcontrollers 14[1] to 14[n] and the main controller 15.

The parameter detection portion 14 detects a parameter indicating the state of each storage battery pack BAT. The measurement portion 122 of the fifth example determines, according to the parameter detected by the parameter detection portion 140, the order (hereinafter referred to as the measurement order) in which the unit capacity learning is performed on the storage battery packs BAT[1] to BAT[n]. The detected parameter is a parameter that is estimated to be related to the state of degradation of each storage battery pack BAT; the measurement portion 122 basically determines the measurement order such that the storage battery pack BAT estimated to have a higher degree of degradation is selected as the measurement target pack earlier than the storage battery pack BAT estimated to have a lower degree of degradation.

The parameter detection portion 14 includes portions represented by symbols 141 to 143 and 145. The measurement portion 122 can intermittently perform the unit capacity learning on each storage battery pack BAT. Here, in order for a specific description to be given, as shown in Fig. 23, it is assumed that at times tⱼ[1], tⱼ[2], ... and tⱼ[n], the jth round of unit capacity learning is completed on the storage battery packs BAT[1], BAT[2], ... and BAT[n], respectively. It is also assumed that a time tⱼ[i+1] is behind a time tⱼ[i] where i is an arbitrary integer, and that between the times tⱼ[1] and tⱼ[n], the (j+1)th round of unit capacity learning is not performed on any storage battery pack BAT.

The time measurement portion 141 includes n timers corresponding to the n storage battery packs BATs, and uses each timer to measure, for each storage battery pack BAT, an elapsed time T_{EL} since the time when the jth round of unit capacity learning was completed.

The total power amount computation portion (power amount detection portion) 142 determines, for each storage battery pack BAT, based on the corresponding pack current value (furthermore, using the pack voltage value as necessary), a total power amount P_{SUM} that is the total value of the charge power amount and the discharge power amount of the storage battery pack BAT during a total target period. Under conditions in which the (j+1)th round of unit capacity learning is not performed on the storage battery pack BAT[i], the start time of the total target period on the storage battery pack BAT[i] is the completion time tⱼ[i] of the jth round of unit capacity learning , and the completion time is the current time.

The variation detection portion 143 determines, for each storage battery pack BAT, a variation amount VR that indicates the degree of variation in the voltage or the SOC between a plurality of storage batteries 20.

A cell voltage detector (not shown) that measures the terminal voltage value (hereinafter referred to as a cell voltage value) of each storage battery 20 can be provided in the electrical storage system 100. Such a cell voltage detector is provided in each storage battery pack BAT, and thus the variation detection portion 143 can acquire, for each storage battery pack BAT, the cell voltage values of a plurality of storage batteries 20. Then, the variation detection portion 143 can determine, for each storage battery pack BAT, the variation amount VR corresponding to the degree of variation in the cell voltage values. For example, the difference between the maximum value and the minimum value of the cell voltage values of the storage batteries 20 or the dispersion of the cell voltage values can be determined as the variation amount VR.

Alternatively, the variation detection portion 143 may determine, based on the cell voltage value and the pack current value, for each storage battery 20, the SOC (the ratio of the remaining capacity of the storage battery 20 to the full charge capacity (for example, a known rated capacity) of the storage battery 20) of the storage battery 20, and may determine, for each storage battery pack BAT, the variation amount VR corresponding to the degree of variation in the SOCs of the storage batteries 20. For example, the difference between the maximum value and the minimum value of the SOCs of the storage batteries 20 or the dispersion of the SOCs may be determined as the variation amount VR.

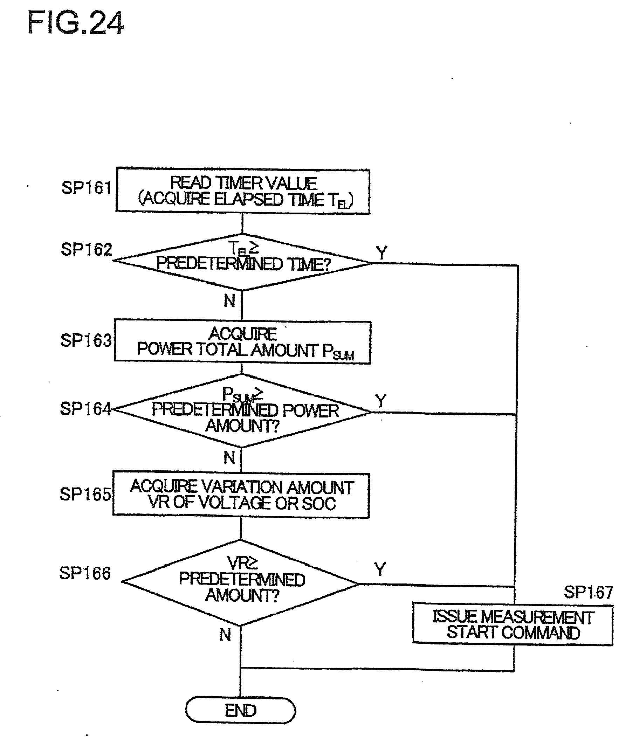

The parameter detection portion 140 monitors, for each storage battery pack BAT, the elapsed time T_{EL}, the total power amount P_{SUM} and the variation amount VR, and performs a series of processing steps in steps SP161 to SP167 of Fig. 24. For example, the series of processing steps are periodically performed, using interrupt processing or the like, for each storage battery pack BAT. It may be considered that the operation flowchart in steps SP161 to SP167 is equivalent to that of Fig. 17.

Specifically, the parameter detection portion 140 can perform the following processing on the storage battery pack BAT[i]. The parameter detection portion 140 acquires, from the timer, the elapsed time T_{EL} on the storage battery pack BAT[i] (step SP161), and issues a measurement start command CM[i] (step SP167) if the elapsed time T_{EL} is equal to or more than a predetermined time (for example, the time of 30 days) (Y in step SP162). The measurement start command CM[i] is a command that instructs the storage battery pack BAT[i] to perform (to start the performance of) the unit capacity learning; the command is issued by a command issue portion 145. If the elapsed time T_{EL} is not equal to or more than the predetermined time, the parameter detection portion 140 acquires the total power amount P_{SUM} on the storage battery pack BAT[i] (step SP163); if the total power amount P_{SUM} is equal to or more than a predetermined power amount (for example, 10000 kWh (kilowatts hour)) (Y in step SP164), the parameter detection portion 140 issues the measurement start command CM[i] (step SP167). If the total power amount P_{SUM} is not equal to or more than the predetermined power amount, the parameter detection portion 140 acquires the variation amount VR on the storage battery pack BAT[i] (step SP165); if the variation amount VR is equal to or more than a predetermined amount (Y in step SP166), the parameter detection portion 140 issues the measurement start command CM[i] (step SP167). The parameter detection portion 140 can individually perform, for each storage battery pack BAT, such command issue determination control. When the measurement start command CM[i] is issued, the measurement portion 122 can start the performance of the (j+1)th round of unit capacity learning on the storage battery pack BAT[i].

The elapsed time T_{EL}, the total power amount P_{SUM} and the variation amount VR described above are the first, second and third parameters for determining the measurement order. Only an arbitrary one parameter or arbitrary two parameters among the first, second and third parameters may be used to determine the measurement order.

In the method described above, the (j+1)th round of unit capacity learning is performed by the measurement portion 122, sequentially from the storage battery pack BAT where the corresponding elapsed time T_{EL} exceeds the predetermined time, sequentially from the storage battery pack BAT where the corresponding total power amount P_{SUM} exceeds the predetermined power amount or sequentially from the storage battery pack BAT where the corresponding variation amount VR exceeds the predetermined amount, among the n storage battery packs BATs.

As is obvious from the above description, the measurement portion 122 determines the measurement order such that the storage battery pack BAT corresponding to a relatively large elapsed time T_{EL}, total power amount P_{SUM} or variation amount VR is selected as the measurement target pack earlier than the storage battery pack BAT corresponding to a relatively small elapsed time T_{EL}, total power amount P_{SUM} or variation amount VR (it may be considered that the main member for this determination is the command issue portion 145 or it may be considered that the issue portion 145 is provided within the measurement portion 122). Consequently, the measurement portion 122 measures the full charge capacity of each storage battery pack BAT, according to a parameter detected by the parameter detection portion 140, while switching the measurement target pack among a plurality of storage battery packs BATs.

With the above-described measurement order determination processing with reference to the elapsed time T_{EL}, even under conditions in which the frequency of charge or discharge of the storage battery pack is low, it is possible to periodically and stably detect the variation in the full charge capacity corresponding to the degradation of storage of the storage battery pack. Moreover, with the above-described measurement order determination processing with reference to the total power amount P_{SUM}, it is possible to relatively early confirm the variation in the full charge capacity of the storage battery pack where it is estimated that the frequency of use is relatively high and the progress of degradation is rapid. It is also estimated that a state where the variation amount VR is large corresponds to a state where the degree of degradation is relatively large. With the above-described measurement order determination processing with reference to the variation amount VR, it is possible to preferentially confirm, the variation in the full charge capacity of the storage battery pack where it is estimated that the degree of degradation is high, as compared with the other storage battery packs.

The time measurement portion 141 may measure, for each storage battery pack BAT, as the elapsed time T_{EL}, the elapsed time since the time when the use of the storage battery pack BAT was started (the time when the storage battery pack BAT is installed in the electrical storage system 100 or the time when the storage battery pack BAT first performs the charge or discharge). In this case, in the time measurement portion 141, a plurality of reference times different from each other are previously set, and, when the elapsed time T_{EL} of the storage battery pack BAT[i] reaches any one of the reference times, the measurement start command CM[i] is issued. Among a plurality of reference times, a difference between two adjacent reference times is set at the predetermined time described above (for example, the time of 30 days), with the result that the same results as in the method shown in Fig. 24 can be obtained.

Similarly, the computation portion 142 may determine, for each storage battery pack BAT, as the total power amount P_{SUM}, the total power amount since the time when the use of the storage battery pack BAT was started. In other words, for each storage battery pack BAT, the start time of the total target period is fixed to the time when the use of the storage battery pack BAT is started, and then the computation portion 142 may determine the total power amount P_{SUM}. In this case, in the computation portion 142, a plurality of reference power amounts different from each other are previously set, and, when the total power amount P_{SUM} of the storage battery pack BAT[i] reaches any one of the reference power amounts, the measurement start command CM[i] is issued. Among a plurality of reference power amounts, a difference between two adjacent reference power amounts is set at the predetermined power amount described above (for example, 10000 kWh), with the result that the same results as in the method shown in Fig. 24 can be obtained.

In the fifth example, it is possible to provide, in each of the subcontrollers 14, a block that determines the first to third parameters of the corresponding storage battery pack BAT and a measurement start command issue portion that issues the measurement start command on the corresponding storage battery pack BAT. Furthermore, among the functions of the measurement portion 122, the function of performing the unit capacity learning on the storage battery pack BAT[i] may be provided in the subcontroller 14[i]. In this way, without dependence on a higher level controller, each subcontroller 14 can manage (including the management of performance timing) the unit capacity learning on the corresponding storage battery pack BAT. The form of determination of the measurement order by such management is called a first measurement order determination form.

The higher level controller refers to a controller on the higher level side of the subcontroller 14. The higher level controller includes the main controller 15 and may further include the system controller 7 and the power management device 6. In second and third measurement order determination forms different from the first measurement order determiination form, the measurement order may be determined.

In the second measurement order determination form, the higher level controller realizes, without dependence on the subcontroller 14, all the functions of the parameter detection portion 140 and the measurement portion 122. In this case, without dependence on the subcontroller 14, the higher level controller acquires the first to third parameters and the storage battery pack state data on the each storage battery pack BAT, and performs schedule control on the capacity learning including issue timing control on the measurement start command. Hence, in the second measurement order determination form, the subcontrollers 14[1] to 14[n] can be omitted from the control unit 102. It may be considered that the first to third parameters are included in the storage battery pack state data.

In the third measurement order determination form, in each subcontroller 14, the block that determines the first to third parameters of the corresponding storage battery pack BAT and the measurement start command issue portion that issues the measurement start command on the corresponding storage battery pack BAT are provided. Then, the first to third parameters of the corresponding storage battery pack BAT and the measurement start command are transmitted from each subcontroller 14 together with the storage battery pack state data to the higher level controller, and in the higher level controller, the schedule control on the capacity learning corresponding to the details of the reception is performed.

Even when any one of the first, second and third measurement order determination forms is adopted, it is possible to realize the technology described in the fifth example. As is obvious from the above description, a plurality of storage battery packs BATs can be simultaneously selected as the measurement target packs (the same is true for the other examples which will be described later).

### <Sixth example>

A sixth example will be described. In the sixth example, the second or third measurement order determination form is assumed to be adopted in the electrical storage system 100. In this case, schedule adjustment on the capacity learning and the like can be performed so that the original function of the electrical storage system 100 is not affected.

Specifically, for example, the charge and discharge control portion 121 sets the number of normal operation packs and also sets the maximum allowed number of measurement target packs based on the discharge power amount (the instruction amount of discharge power) P_{D}* described above when the discharge control is performed or based on the charge power amount (the instruction amount of charge power) P_{C}* described above when the charge control is performed. The measurement portion 122 places a limit on the performance of the unit capacity learning as necessary such that the number of storage battery packs BATs on which the unit capacity learning is simultaneously performed does not exceed the maximum allowed number of measurement target packs.

Specifically, for example, under conditions in which the number of measurement target packs is zero and the maximum allowed number of measurement target packs is "2", when measurement start commands CM[1] and CM[2] are issued, the measurement portion 122 performs the unit capacity learning on the packs BAT[1] and BAT[2] whereas while the unit capacity learning is being performed on the packs BAT[1] and BAT[2], when a measurement start command CM[3] is issued, the measurement portion 122 is placed on standby for the performance of the unit capacity learning on the pack BAT[3] corresponding to the measurement start command CM[3] until the unit capacity learning on the pack BAT[1] or BAT[2] is completed.

Moreover, for example, under conditions in which the number of measurement target packs is zero and the maximum allowed number of measurement target packs is "1", when the measurement start commands CM[1] and CM[2] are simultaneously issued because the total power amounts P_{SUM} of packs BAT[1] and BAT[2] are simultaneously equal to or more than a predetermined power amount, the measurement portion 122 compares the variation amounts VR of packs BAT[1] and BAT[2]. Then, for example, when the variation amount VR of the pack BAT[1] is larger than that of the pack BAT[2], the measurement portion 122 may be placed on standby for the performance of the unit capacity learning on the pack BAT[2] until the unit capacity learning on the pack BAT[1] is completed while starting the performance of the unit capacity learning on the pack BAT[1].

Preferably, for example, the control block 102 is formed such that the control block 102 periodically issues a total measurement command, and, when the total measurement command is issued, the measurement portion 122 determines the measurement order based on the first, second or third parameter at the time when the total measurement command is issued, and performs the unit capacity learning on each storage battery pack BAT according to the determined measurement order. In this case, as in the fifth example, the measurement portion 122 preferably determines the measurement order such that the storage battery pack BAT corresponding to a relatively large elapsed time T_{EL}, total power amount P_{SUM} or variation amount VR is selected as the measurement target pack earlier than the storage battery pack BAT corresponding to a relatively small elapsed time T_{EL}, total power amount P_{SUM} or variation amount VR.

### <Seventh example>

A seventh example will be described. In the seventh example, on the assumption that the second or third measurement order determination form is adopted in the electrical storage system 100, technology related to the standby pack will be described.

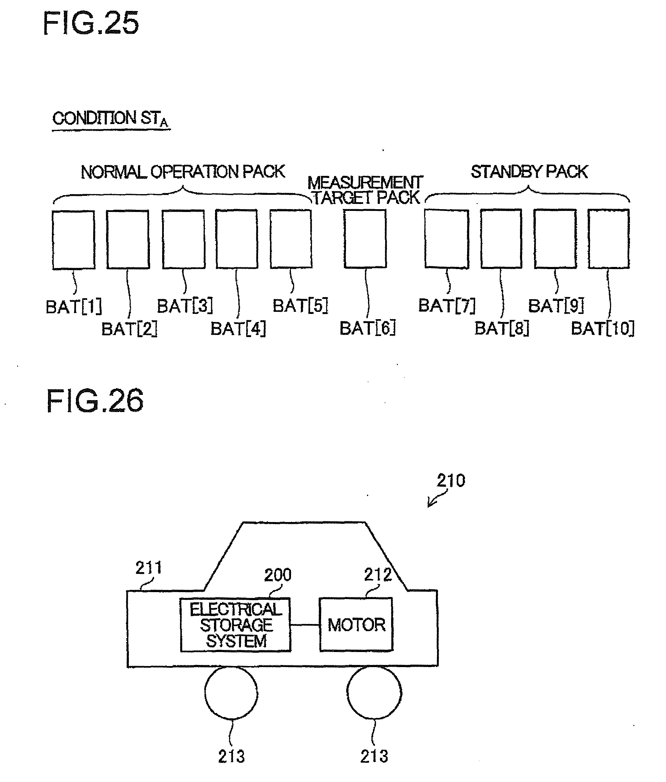

As described in the sixth example, the charge and discharge control portion 121 can set the number of normal operation packs based on the discharge power amount P_{D}* described above when the discharge control is performed or based on the charge power amount P_{C}* described above when the charge control is performed. Now, in order to give a specific description, as shown in Fig. 25, a condition ST_{A} is assumed under which settings are made such that n = 10 and the number of normal operation packs is 5 and the packs BAT[1] to BAT[5] are the normal operation packs. The packs BAT[6] to BAT[10] can be individually either the measurement target pack or the standby pack. The packs BAT[6] to BAT[10] may all be the standby packs; under the condition ST_{A}, it is assumed that the pack BAT[6] is the measurement target pack and that the packs BAT[7] to BAT[10] are the standby packs.

Under such condition ST_{A}, the charge and discharge control portion 121 can perform the discharge control, and in this case, can sequentially update the discharge power amount P_{D}* based on the latest power consumption amount (the measurement value or the prediction value) of the load 112. Then, when it is determined that the latest discharge power amount P_{D}* obtained by the updating is larger than the power amount that can be discharged in the normal operation packs BAT[1] to BAT[5], the charge and discharge control portion 121 can incorporate all or part of the standby packs BAT[7] to BAT[10] into the normal operation packs. The charge and discharge control portion 121 discharges, to the load 112, the storage battery packs (any or all of the packs BAT[7] to BAT[10]) newly incorporated into the normal operation pack, together with the packs BAT[1] to BAT[5].

Likewise, under the condition ST_{A}, the charge and discharge control portion 121 can perform the charge control, and in this case, can sequentially update the charge power amount P_{C}* based on the latest supply power amount of charging source. Then, when it is determined that the latest charge power amount P_{C}* obtained by the updating is larger than the power amount that can be charged in the normal operation packs BAT[1] to BAT[5], the charge and discharge control portion 121 can incorporate all or part of the standby packs BAT[7] to BAT[10] into the normal operation packs. The charge and discharge control portion 121 charges, based on the supply power from the charging source, the storage battery packs (any or all of the packs BAT[7] to BAT[10]) newly incorporated into the normal operation pack, together with the packs BAT[1] to BAT[5].

When part of the standby packs BAT[7] to BAT[10] are incorporated into the normal operation packs, the charge and discharge control portion 121 uses the parameter detected by the parameter detection portion 140, and thereby can determine which standby pack is incorporated into the normal operation pack. Specifically, for example, preferably, the charge and discharge control portion 121 preferentially incorporates, into the normal operation pack, the storage battery pack BAT corresponding to a relatively small elapsed time T_{EL}, total power amount P_{SUM} or variation amount VR as compared with the storage battery pack BAT corresponding to a relatively large elapsed time T_{EL}, total power amount P_{SUM} or variation amount VR.

The standby pack can also be considered to be a candidate of the measurement target pack that can be selected as the measurement target pack in near future. On the standby pack corresponding to a relatively large elapsed time T_{EL}, total power amount P_{SUM} or variation amount VR, that is, the standby pack which is estimated to have a relatively high degree of degradation, the unit capacity learning is preferably performed as early as possible. Since, by the incorporation processing described above, the standby pack estimated to have a relatively high degree of degradation is maintained as the standby pack as much as possible, and is prepared for the start of the capacity learning, the desire as described above is satisfied.

### <Eighth example>

An eighth example will be described. The measurement portion 122 may perform the unit capacity learning on the storage battery packs BATs in a predetermined order. Specifically, for example, the control block 102 is formed such that the total measurement command is periodically issued in the control block 102, and, when the total measurement command is issued, the measurement portion 122 may perform predetermined order measurement processing in which while the measurement target packs are sequentially switched according to the predetermined order among the n storage battery packs BATs, the full charge capacity of each storage battery pack BAT is measured.

The control block 102 may include the prediction portion described above (not shown) that predicts the power consumption amount of the load 112. The measurement portion 122 references a prediction value (hereinafter, a prediction power amount) of the power consumption amount of the load 112 in a prediction target period having a predetermined time length (for example, the time length of one day), determines the average amount of the prediction power amount in the prediction target period and detects, within the prediction target period, a period of time during which the prediction power amount is lower than the average amount, with the result that the predetermined order measurement processing may be performed within the detected period.

The control block 102 intermittently issues the total measurement command, and thereby can make the measurement portion 122 intermittently perform the predetermined order measurement processing. A timer that measures an elapsed time T_{EL}' since the completion of the jth round of predetermined order measurement processing can be provided in the control block 102. Preferably, when the elapsed time T_{EL}' reaches a predetermined time (for example, the time of 30 days), the control block 102 resets the value of the timer, and simultaneously issues a new total measurement command, and thereby makes the measurement portion 122 perform the (j + 1)th round of predetermined order measurement processing.

The total power amount computation portion 142 of Fig. 22 may determine the total value (hereinafter referred to as a total power amount P_{TOTAL}) of the charge power amount and the discharge power amount of the n storage battery packs BATs with reference to the time when the jth round of predetermined order measurement processing is completed. The total power amount P_{TOTAL} is the sum of the total values of the n storage battery packs BATs. When the total power amount P_{TOTAL} reaches a predetermined power amount, the measurement portion 122 may perform the (j + 1)th round of predetermined order measurement processing.

### <Ninth example>

A ninth example will be described. Technology described in the ninth example can be applied to the first embodiment described above unless otherwise a contradiction arises, and can also be applied to an arbitrary one of the other technologies described above in the second embodiment.

As described above, in the first unit capacity learning, after the pre-process in which the measurement target pack is completely discharged, the post-process in which the measurement target pack is charged is performed (hence, the first unit capacity learning includes the pre-process of the discharge and the post-process of the charge). In the second unit capacity learning, after the pre-process in which the measurement target pack is charged to bring the measurement target pack into the fully charged state, the post-process in which the measurement target pack is discharged is performed (hence, the second unit capacity learning includes the pre-process of the charge and the post-process of the discharge). In each of the first unit capacity learning and the second unit capacity learning, the balancing adjustment can be performed between the pre-process and the post-process. In the ninth example, a technology that facilitates the reduction of the time in which the unit capacity learning is performed on a plurality of storage battery packs will be described.

It is now assumed that n = 10, and a period JJ during which the unit capacity learning processing is performed on only the storage battery pack BAT[1] will be considered. Here, the maximum allowed number of measurement target packs is assumed to be 1; it may be 2 or more.

In the period JJ, the measurement portion 122 acquires the SOCs of the storage battery packs BAT[2] to BAT[10], and sets, among the SOCs of the storage battery packs BAT[2] to BAT[10], the storage battery pack corresponding to the lowest SOC at the subsequent measurement target pack. Here, it is assumed that the pack BAT[2] is set at the subsequent measurement target pack. In the period JJ, the measurement portion 122 discharges the pack BAT[2] such that the SOC of the pack BAT[2] is zero or approaches zero (that is, performs the pre-process in the first unit capacity learning). Then, after the completion of the unit capacity learning of the pack BAT[1], the measurement portion 122 performs the first unit capacity learning on the pack BAT[2]. In this case, since all or part of the pre-process on the pack BAT[2] has been completed, the first unit capacity learning on the pack BAT[2] is completed in a relatively short period of time. When the balancing adjustment is included in the first unit capacity learning, the measurement portion 122 may further perform the balancing adjustment on the pack [2] in the period JJ.

Instead of what has been described above, the following may be performed. In the period JJ, the measurement portion 122 acquires the SOCs of the storage battery packs BAT[2] to BAT[10], and sets, among the SOCs of the storage battery packs BAT[2] to BAT[10], the storage battery pack corresponding to the highest SOC at the subsequent measurement target pack. Here, the pack BAT[3] is assumed to be set at the subsequent measurement target pack. The measurement portion 122 charges, in the period JJ, the pack BAT[3] such that the SOC of the pack BAT[3] is 100% or approaches 100% (that is, performs the pre-process in the second unit capacity learning). Then, after the completion of the unit capacity learning on the pack BAT[1], the measurement portion 122 performs the second unit capacity learning on the pack BAT[3]. In this case, since all or part of the pre-process on the pack BAT[3] has been completed, the second unit capacity learning on the pack BAT[3] is completed in a relatively short period of time. When the balancing adjustment is included in the second unit capacity learning, the measurement portion 122 may further perform the balancing adjustment on the pack [3] in the period JJ.

### «Variations and the like»

Specific values indicated in the above description are simply illustrative; naturally they can be changed to various values. As explanatory notes that can be applied to the embodiments described above or matters related to the present invention, explanatory notes 1 and 2 will be described below. The details of the explanatory notes can be freely combined unless otherwise a contradiction arises.

### [Explanatory note 1]

In the electrical storage system of the first or second embodiment, a power supply device is said to be included. In the electrical storage system and the power supply device of the first embodiment, arbitrary portions shown in Figs. 1 to 3 and 15 are included, and a power conversion portion (for example, one or more power converters 16) that performs power conversion between the a plurality of storage battery packs 12 and an external device that inputs or outputs power is included. In the second embodiment, the power supply device is formed with blocks 101 to 103 of Fig. 19; the block 103 corresponds to the power conversion portion described above, and the block 104 corresponds to the external device described above.

### [Explanatory note 2]

As shown in Fig. 26, the electrical storage system 200 that is the electrical storage system of the first embodiment or the electrical storage system 100 of the second embodiment may be incorporated into a vehicle 210 that is an example of the mobile main body. The vehicle 210 includes: a vehicle body 21 1 that is a mobile main body portion; a motor (motive power source) 212 that converts power (that is, the discharge power of a plurality of storage battery packs 12 or a plurality of storage battery packs BATs) from the electrical storage system 200 into power for moving the vehicle body 211; and drive wheels 213 that rotate with the power obtained by the motor 212 to move the vehicle body 211. The mobile body may be a mobile body (for example, a ship or a walking rubout) that is not classified into a vehicle.

### List of Reference Symbols

1 power management system
2 storage battery aggregate
3 factory facility
4 system power
5 load of factory
6 power management device
7 system controller
8 charge and discharge control device
9 load power management device
10 overall power monitoring device
1 storage battery power management device
12 storage battery pack
13 switch substrate
14 subcontroller
15 master controller
100 electrical storage system
101 electrical storage block
102 control block
103 power conversion block
104 power input and output block
121 charge and discharge control portion
122 full charge capacity measurement portion
140 parameter detection portion
BAT[1] to BAT[n] storage battery packs

## Claims

1. An electrical storage system comprising:
a plurality of electrical storage portions that are connected parallel to each other;
a measurement portion that measures a full charge capacity of each of the electrical storage portions while switching an electrical storage portion that is a measurement target among the electrical storage portions; and
a charge and discharge control portion that performs charge and discharge control on the electrical storage portions,
wherein the charge and discharge control portion makes other electrical storage portion other than the measurement target included in the electrical storage portion perform charge or discharge in a period of time during which the measurement portion measures the full charge capacity of the electrical storage portion that is the measurement target.

2. The electrical storage system of claim 1 further comprising:
a parameter detection portion that detects a parameter indicating a state of each of the electrical storage portions,
wherein the measurement portion determines, according to the parameter detected by the parameter detection portion, an order of the measurement among the electrical storage portions.

3. The electrical storage system of claim 2,
wherein the parameter detection portion detects, as the parameter, for each of the electrical storage portions, a total power amount in charge and discharge of the electrical storage portion, and
the measurement portion determines the order of the measurement such that an electrical storage portion corresponding to a relatively large total power amount is selected as the measurement target earlier than an electrical storage portion corresponding to a relatively small total power amount.

4. The electrical storage system of claim 2,
wherein each of the electrical storage portions includes a plurality of storage batteries that are connected in series,
the parameter detection portion detects, as the parameter, for each of the electrical storage portions, a voltage value or a SOC of each of the storage batteries, and detects, for each of the electrical storage portions, a variation in the voltage value or the SOC, and
the measurement portion determines the order of the measurement such that an electrical storage portion corresponding to a relatively large variation is selected as the measurement target earlier than an electrical storage portion corresponding to a relatively small variation.

5. The electrical storage system of claim 1 further comprising:
a power amount detection portion that detects, for each of the electrical storage portions, a total power amount in charge and discharge of the electrical storage portion,
wherein the measurement portion performs the measurement, from an electrical storage portion in which the corresponding total power amount exceeds a predetermined amount, among the electrical storage portions.

6. The electrical storage system of any one of claims 1 to 5,
wherein the charge and discharge control portion performs discharge control such that a discharge power amount corresponding to a power consumption amount of a load connected to the electrical storage system is discharged by the other electrical storage portion, and
when the discharge power amount is larger than a power amount that can be discharged by the other electrical battery portion, the charge and discharge control portion stops the measurement by the measurement portion, and makes an electrical storage portion in which the measurement is stopped perform discharge together with the other electrical storage portion.

7. The electrical storage system of any one of claims 1 to 5,
wherein the charge and discharge control portion performs charge control such that a charge power amount corresponding to a supply power amount of a charging source connected to the electrical storage system is supplied to the other electrical storage portion, and
when the charge power amount is larger than a power amount that can be charged in the other electrical storage portion, the charge and discharge control portion stops the measurement by the measurement portion, and makes an electrical storage portion in which the measurement is stopped perform charge together with the other electrical storage portion.

8. The electrical storage system of any one of claims 1 to 7, further comprising:
a temperature detection portion that detects a temperature of each of the electrical storage portions,
wherein when a detected temperature of the electrical storage portion that is the measurement target deviates from a predetermined temperature range, the measurement portion stops the measurement on the electrical storage portion.

9. The electrical storage system of claim 1 further comprising:
a parameter detection portion that detects a parameter indicating a state of each of the electrical storage portions,
wherein the electrical storage portions include normal electrical storage portion serving as the other electrical storage portion and a plurality of standby electrical storage portions different from the electrical storage portion that is the measurement target and the normal electrical storage portion,
the charge and discharge control portion performs discharge control such that a discharge power amount corresponding to a power consumption amount of a load connected to the electrical storage system is discharged by the normal electrical storage portion, and
under conditions in which the discharge power amount is larger than a power amount that can be discharged by the normal electrical storage portion, the charge and discharge control portion incorporates a part of the standby electrical storage portion into the normal electrical storage portion according to the parameter detected by the parameter detection portion.

10. The electrical storage system of claim 1 further comprising:
a parameter detection portion that detects a parameter indicating a state of each of the electrical storage portions,
wherein the electrical storage portions include normal electrical storage portion serving as the other electrical storage portion and a plurality of standby electrical storage portions different from the electrical storage portion that is the measurement target and the normal electrical storage portion,
the charge and discharge control portion performs charge control such that a charge power amount corresponding to a supply power amount of a charging source connected to the electrical storage system is supplied to the normal electrical storage portion, and
under conditions in which the charge power amount is larger than a power amount that can be charged in the normal electrical storage portion, the charge and discharge control portion incorporates a part of the standby electrical storage portions into the normal electrical storage portion according to the parameter detected by the parameter detection portion.

11. The electrical storage system of claim 9 or 10,
wherein the parameter detection portion detects, as the parameter, for each of the electrical storage portions, a total power amount in charge and discharge of the electrical storage portion, and
under the conditions, the measurement portion preferentially incorporates, into the normal electrical storage portion, a standby electrical storage portion corresponding to a relatively small total power amount as compared with a standby electrical storage portion corresponding to a relatively large total power amount.

12. The electrical storage system of claim 9 or 10,
wherein each of the electrical storage portions includes a plurality of storage batteries that are connected in series,
the parameter detection portion detects, as the parameter, for each of the electrical storage portions, a voltage value or a SOC of each of the storage batteries, and detects, for each of the electrical storage portions, a variation in the voltage value or the SOC, and
under the conditions, the measurement portion preferentially incorporates, into the normal electrical storage portion, a standby electrical storage portion corresponding to a relatively small variation as compared with a standby electrical storage portion corresponding to a relatively large variation.

13. The electrical storage system of any one of claims 1 to 12, further comprising:
a power conversion portion that performs power conversion between the electrical storage portions and an external device that inputs or outputs power.

14. A mobile body comprising:
the electrical storage system of any one of claims 1 to 13;
a mobile main body portion; and
a motive power source that converts power from the electrical storage system into power that moves the mobile main body portion.
